# FASCICULE DE BREVET EUROPEEN

(11) **EP 3 761 199 B1**
(45) Date de publication et mention de la délivrance du brevet: **21.07.2021**
(21) Numéro de dépôt: 20182112.1
(22) Date de dépôt: 24.06.2020
(51) Int. Cl.: G06F 21/54

(54) **PROCÉDÉ D'EXÉCUTION D'UN CODE BINAIRE D'UNE FONCTION SÉCURISÉE PAR UN MICROPROCESSEUR**
VERFAHREN ZUR AUSFÜHRUNG EINES BINÄRCODES EINER DURCH EINEN MIKROPROZESSOR GESICHERTEN FUNKTION
METHOD FOR EXECUTING A BINARY CODE OF A SECURE FUNCTION BY A MICROPROCESSOR

(30) Priorité: 05.07.2019 FR 1907498
(43) Date de publication de la demande: 06.01.2021
(73) Titulaire: Commissariat à l'Energie Atomique et aux Energies Alternatives, 75015 Paris (FR)
(72) Inventeur: SAVRY, Olivier, 38054 GRENOBLE Cedex 9 (FR)
(74) Mandataire: INNOV-GROUP

(56) Documents cités:
- EP-A1- 2 280 365
- GB-A- 2 547 249
- US-A1- 2019 087 566

## Description

L'invention concerne un procédé d'exécution d'un code binaire d'une fonction sécurisée par un microprocesseur. L'invention concerne également :
- un code binaire d'une fonction sécurisée, un support d'enregistrement d'informations et un microprocesseur pour la mise en œuvre de ce procédé d'exécution, et
- un compilateur pour générer ce code binaire.

Pour obtenir des informations sur un code binaire ou provoquer un fonctionnement inattendu du code binaire, de nombreuses attaques sont possibles.

Certaines de ces attaques sont basées sur un usage erroné d'un pointeur de donnée. On rappelle ici qu'un pointeur de donnée est une donnée qui contient l'adresse de la donnée à traiter et non pas directement la valeur de la donnée traitée.

L'usage de tels pointeurs de données est fréquent dans un code exécutable. Par exemple, un tel pointeur est utilisé pour pointer vers la première cellule d'un tableau de plusieurs cellules. Ensuite, pour traiter la cellule suivante de ce tableau, il suffit simplement d'incrémenter l'adresse contenue dans le pointeur d'un pas prédéterminé.

Lors de la conception du code source, le pointeur est prévu pour manipuler et traiter un groupe de données d'une taille prédéterminée. Toutefois, lors de l'exécution du code binaire correspondant, il est parfois possible de s'arranger pour que ce pointeur pointe sur une donnée située en dehors de ce groupe de données. Par exemple, un tel usage erroné de ce pointeur est provoqué en saisissant, dans un champ de saisie, une donnée dont la taille est bien plus grande que celle prévue initialement par les développeurs de la fonction sécurisée. Grâce à cela, il est possible d'écrire des données dans des plages d'adresses où cela ne devrait pas être fait. Autrement dit, le pointeur est utilisé pour pointer vers des adresses invalides. Un exemple de ce premier type d'attaque est connu sous le terme de « attaque par dépassement de tampon» ou « stack overflow attack », lorsque cette attaque vise la pile utilisée par la fonction sécurisée. Lorsque le pointeur est utilisé pour écrire des données avant la plage d'adresses prévue à cet effet dans la pile, l'attaque est également connue sous le terme de « stack underflow attack ».

Ce premier type d'attaque peut être mis en œuvre de façon assez similaire pour écrire des données à des adresses invalides dans d'autres parties de la mémoire que la pile, comme par exemple, dans une partie connue sous le terme de « tas » (« heap » en anglais).

Ces premiers types d'attaques ont en commun d'utiliser un pointeur valide pour pointer sur des adresses invalides. On dit alors qu'elles concernent ce qui touche au domaine de la « sécurité spatiale » (« spatial safety » en anglais).

Il existe aussi des usages erronés des pointeurs qui touchent au domaine de la sécurité temporelle (« temporal safety » en anglais). Dans ce cas, un pointeur invalide est utilisé pour pointer sur une adresse valide. Un pointeur invalide est un pointeur qui a été utilisé de façon valide pour traiter des données dans un contexte limité, et qui est ensuite utilisé à nouveau en dehors de ce contexte limité. Cela peut se produire si, par exemple, ce pointeur n'a pas correctement été réinitialisé ou initialisé. Ce type de pointeur invalide est connu sous le terme anglais de « dangling pointer ».

Certaines attaques repèrent donc ces pointeurs invalides, puis les utilisent pour lire ou écrire des données à des instants où ils ne devraient pas être utilisés pour cela. À titre d'illustration de ce second type d'attaque, on peut citer l'attaque connue sous l'expression anglaise de « use-after-free ».

On notera aussi que les attaques basées sur des usages erronés de pointeurs ne concernent pas que les pointeurs de données, c'est-à-dire, les pointeurs qui pointent vers une donnée à traiter par le microprocesseur. Ce type d'attaque concerne également les pointeurs appelés ici « pointeurs de fonctions », c'est-à-dire, un pointeur qui contient l'adresse non pas d'une donnée, mais d'une instruction à exécuter par le microprocesseur.

Plusieurs solutions ont déjà été proposées pour rendre plus difficile un usage erroné d'un pointeur.

Par exemple, une solution consiste à utiliser des pointeurs enrichis comme par exemple, les pointeurs connus sous l'expression anglaise de « low-fat pointer ». Dans ce cas, chaque pointeur comporte en plus de l'adresse de la donnée vers laquelle il pointe, une plage de bits contenant au moins une limite supérieure ou inférieure. Ensuite, à chaque fois que ce pointeur est utilisé, un mécanisme de détection est mis en œuvre pour détecter si l'adresse actuelle vers laquelle pointe ce pointeur dépasse, par exemple, la limite supérieure. En réponse à un tel dépassement, une erreur est signalée. Ainsi, un usage erroné de ce pointeur est détecté. Un exemple d'implémentation d'un tel pointeur enrichi est décrit dans l'article suivant : T. Kroes et AL : « Delta Pointers: Buffer Overflow Checks Without the Checks », in Proceedings of the Thirteenth EuroSys Conférence, New York, NY, USA, 2018, p. 22:1-22:14.

Ces solutions fonctionnent correctement pour un type d'attaque bien précis ou pour un nombre limité d'attaques. Par exemple, la solution décrite dans l'article de T. Kroes et AL fonctionne uniquement pour contrer les attaques du type « stack overflow attack », mais ne fonctionne pas contre les attaques du type « stack underflow attack ». Elle ne fonctionne pas non plus contre les attaques qui concernent le domaine de la sécurité temporelle, comme l'attaque « use-after-free ».

De l'état de la technique est également connu de EP2280365A1, GB2547249A et US2019/087566A1.

L'invention vise à proposer un procédé d'exécution d'une fonction sécurisée par un microprocesseur, robuste vis-à-vis d'un spectre plus large d'attaques basées sur un usage erroné d'un pointeur.

L'invention a donc pour objet un tel procédé d'exécution d'un code binaire d'une fonction sécurisée par un microprocesseur conforme à la revendication 1.

L'invention a également pour objet un code binaire d'une fonction sécurisée apte à être exécuté par un microprocesseur, en mettant en œuvre le procédé d'exécution ci-dessus.

L'invention a également pour objet un support d'enregistrement d'informations, lisible par un microprocesseur, ce support d'enregistrement d'informations comportant le code binaire ci-dessus.

L'invention a également pour objet un microprocesseur pour la mise en œuvre du procédé ci-dessus.

Enfin, l'invention a également pour objet un compilateur apte à transformer automatiquement un code source d'une fonction sécurisée en un code binaire tel que revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'une fonction sécurisée,
- la figure 2 est une illustration schématique de la structure d'un pointeur enrichi utilisé lors de l'exécution du code binaire par l'appareil de la figure 1,
- la figure 3 est une illustration schématique de la structure d'une ligne de donnée utilisée lors de l'exécution du code binaire par l'appareil de la figure 1,
- la figure 4 est un organigramme d'un procédé d'exécution du code binaire par l'appareil de la figure 1 dans lequel l'utilisation des pointeurs de données est sécurisée,
- la figure 5 est une illustration schématique de la structure d'une ligne d'instruction du code binaire exécuté par l'appareil de la figure 1,
- la figure 6 est un organigramme d'un procédé d'exécution du code binaire par l'appareil de la figure 1 dans lequel l'utilisation des pointeurs d'instructions est sécurisée,
- la figure 7 est une illustration schématique d'un compilateur apte à générer le code binaire exécuté par l'appareil de la figure 1.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Pour être exécuté par un microprocesseur, le code binaire est enregistré dans des lignes d'une mémoire principale. Typiquement, le code binaire comporte plusieurs centaines ou milliers de lignes. Chacune de ces lignes est appelée "ligne de code". Chaque ligne de code est enregistrées à une adresse qui lui est propre dans la mémoire principale. Chaque ligne de code contient une seule instruction ou à une seule donnée. Par la suite, lorsque le code contenu dans la ligne de code correspond à une instruction, la ligne de code est appelée "ligne d'instruction". Lorsque le code contenu dans la ligne de code correspond une donnée, la ligne de code est appelée "ligne de donnée". Le terme "code" est quant à lui utilisé pour désigner aussi bien une instruction qu'une donnée et le terme "ligne de code" est utilisé pour désigner aussi bien une ligne de donnée qu'une ligne d'instruction.

Au niveau du code binaire, une instruction et une donnée correspondent tous les deux à des bits. Toutefois, les instructions et les données ne sont pas traitées de la même façon par un microprocesseur. Par exemple, une instruction est seulement chargée puis exécutée par le microprocesseur lorsque le compteur ordinal pointe sur cette instruction. Une donnée est chargée par le microprocesseur seulement en réponse à l'exécution par ce microprocesseur d'une instruction de chargement de cette donnée.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

### Chapitre II : Architecture de l'appareil :

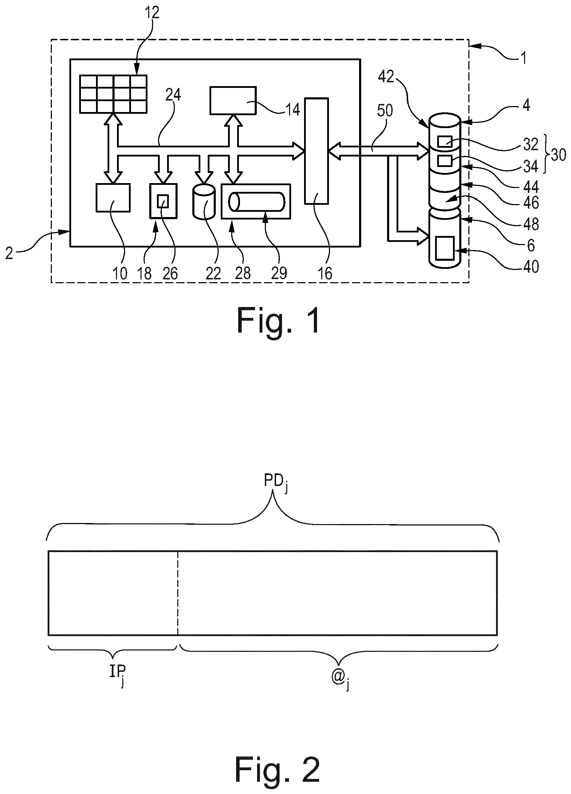

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions et des données d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine est adressable individuellement et peut être transféré en un seul cycle d'horloge depuis la mémoire 4 jusque dans un registre du microprocesseur par l'intermédiaire d'un bus de données. A cet effet, la taille N_{MM} d'un mot-machine est égale au nombre maximum de bits qui peuvent être transférés simultanément sur ce bus de données. Ici, la taille NMM est strictement supérieure Nᵢₙₛₜ bits, où Nᵢₙₛₜ bits est le nombre de bits des instructions du jeu d'instructions du microprocesseur 2. Typiquement, Nᵢₙₛₜ est un entier supérieure ou égale à 8, 16, 32 ou 64. Dans cet exemple, Nᵢₙₛₜ est égal à 32 et la taille N_{MM} est égale à 128 bits.

La position de chaque mot machine dans la mémoire 4 est repéré par une adresse. Pour recevoir cette adresse, la mémoire 4 est reliée au microprocesseur 2 par un bus d'adresses. La taille N_{@} de l'adresse, en nombre de bits, détermine le nombre maximum de mot-machines qui peuvent être adressés individuellement dans la mémoire 4. Typiquement, la taille N_{@} est supérieure ou égale à 8, 16, 32 ou 64 bits. Par exemple, dans ce mode de réalisation, la taille N_{@} est égale à 64 bits.

Classiquement, la mémoire 4 est divisée en plusieurs parties. Par exemple, ici, la mémoire 4 comporte notamment les parties suivantes :
- une première partie 42 contenant les instructions à exécuter,
- une deuxième partie 44 contenant des données à traiter,
- une troisième partie 46 utilisée pour sauvegarder le contexte d'exécution d'une fonction lorsqu'elle appelle une autre fonction appelée "routine", et
- une quatrième partie 48 utilisée pour allouer dynamiquement de la mémoire au programme en cours d'exécution afin d'y enregistrer des données.

La partie 42 est connue sous le terme de "segment de code" ("code segment" en anglais). La partie 44 contient typiquement les variables statiques et globales du programme exécuté. La partie 46 est connue sous le terme de "pile d'exécution" ("call stack" en anglais). Par conséquent, par la suite, la partie 46 est également appelée "pile 46". Enfin la partie 48 est connue sous le terme de "tas" ("heap" en anglais). Ainsi, par la suite, la partie 48 est également appelée "tas 48".

Le code binaire 30 comporte notamment un code machine 32 d'une fonction sécurisée et un bloc 34 de données nécessaires à l'exécution du code binaire 30. Le code machine 32 et le bloc 34 sont enregistrés dans, respectivement, les parties 42 et 44.

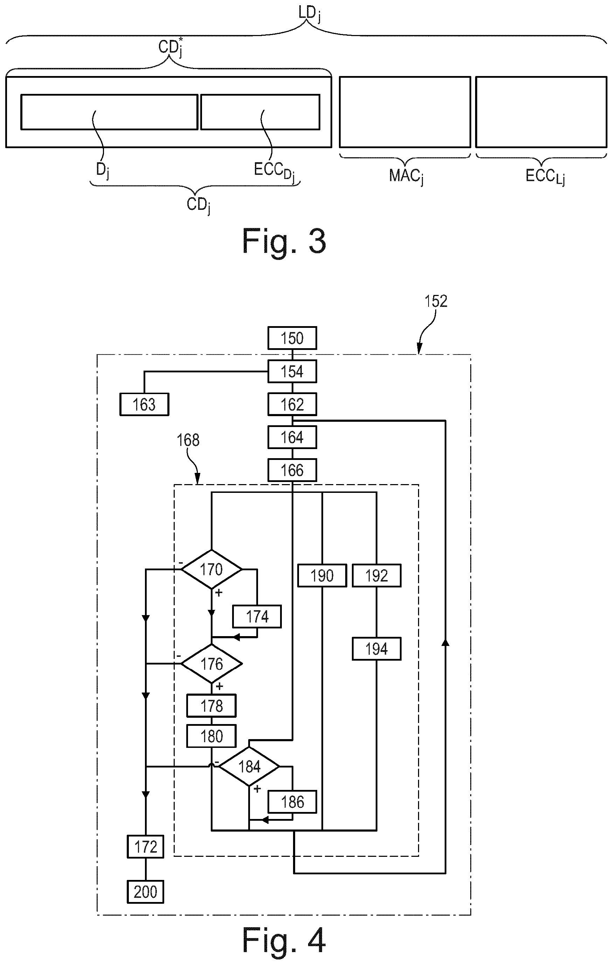

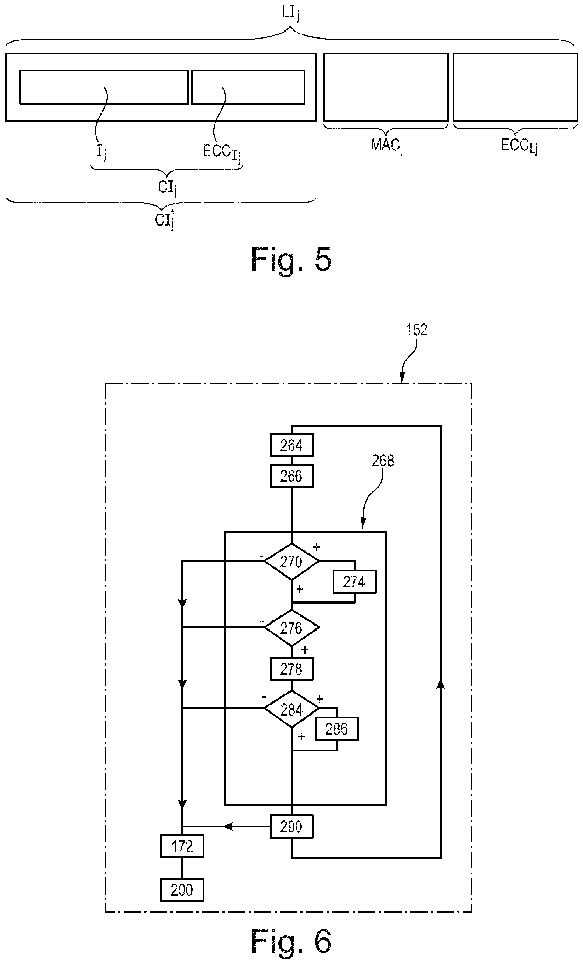

Ici, chaque ligne de code du code binaire correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Les structures d'une ligne d'instruction et d'une ligne de donnée sont décrites en détail en référence aux figures 3 et 5.

L'exécution du code binaire 30 débute par le chargement et le traitement de données du bloc 34. Ici, en particulier, le bloc 34 comporte notamment un cryptogramme ka* obtenu en chiffrant une clé secrète ka à l'aide d'une clé publique pk_{CPU} du microprocesseur 2.

A titre d'illustration, le microprocesseur 2 est conforme à l'architecture RISC (« Reduced Instructions Set Computer ») et il met en œuvre le jeu d'instructions "RISC-V".

Ici, l'unité 10 est une unité arithmétique et logique de Nᵢₙₛₜ bits.

Le chargeur 18 charge dans la file 22 la prochaine instruction à exécuter par l'unité 10 à partir de la partie 42 de la mémoire 4. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution des fonctions sécurisées. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier l'intégrité et l'authenticité d'une ligne de code à partir d'un code d'authentification de message plus connu sous l'acronyme MAC (« Message Authentification Code »),
- construire un code d'authentification de message,
- chiffrer un code pour obtenir un cryptogramme de ce code,
- déchiffrer un cryptogramme d'un code pour obtenir le code en clair, et
- exécuter une fonction préprogrammée Fᵢᵥ.

La mémoire 29 est utilisée pour stocker les informations secrètes nécessaires à la mise en œuvre du procédé des figures 4 et 6. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour la vérification des codes d'authentification de message,
- un clé privée secrète sk_{CPU} qui permet de déchiffrer les données qui ont été chiffrées à l'aide de la clé publique pk_{CPU}.

Dans cet exemple de réalisation, l'ensemble 12 comporte des registres généraux utilisables pour stocker tout type de données. La taille de chacun de ces registres est, par exemple, égale à NMM.

Un bus d'échange de données 24 qui relie les différents composants du microprocesseur 2 entre eux est représenté sur la figure 1 pour indiquer que les différents composants du microprocesseur peuvent échanger des données entre eux. Le bus de données et le bus d'adresses qui relient le microprocesseur 2 à la mémoire 4 ont été représentés par une double flèche 50 pour simplifier la figure 1.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III : SÉCURISATION DES POINTEURS DE DONNEES

Des données Dⱼ traitées lors de l'exécution du code machine 32 sont enregistrées dans la mémoire 4. Par exemple, le code binaire 30, en plus du code machine 32, comporte des données à traiter lors de l'exécution du code machine 32. De plus, lors de l'exécution du code machine 32, celui-ci génère des données à enregistrer dans une variable globale ou statique. Ces données sont typiquement contenues dans la partie 44 de la mémoire 4.

De même, à chaque fois qu'une fonction appelante déclenche l'exécution d'une fonction appelée, le contexte d'exécution de la fonction appelante est sauvegardé dans la pile 46. La fonction appelée sauvegarde également dans la pile 46 des données telles que des variables locales.

Lors de l'exécution du code machine 32, des données peuvent aussi être enregistrées dans le tas 48.

Pour traiter et manipuler certaines de ces données, le code machine 32 utilise des pointeurs de données. Un pointeur de donnée est une variable qui contient l'adresse de la ligne de donnée à traiter. L'usage d'un pointeur de donnée est, par exemple, systématique lors que la donnée est enregistrée dans la pile 46 ou le tas 48. Comme décrit dans l'introduction de cette demande, un usage erroné d'un pointeur de donnée peut être exploité pour mener à bien un attaque contre la fonction sécurisée. Pour détecter et mettre en échec de telles attaques, ici, chaque donnée Dⱼ enregistrée dans la mémoire 4 et qui est traitée à l'aide d'un pointeur de donnée, est codée dans une ligne respective LDⱼ. La ligne LDⱼ est une ligne de donnée. Par la suite, dans ce chapitre, l'indice j est utilisé pour identifier la ligne de données LDⱼ parmi les autres lignes de données enregistrées dans la mémoire 4. Ici, la taille de la ligne LDⱼ est égale à la taille d'un mot-machine et donc égale à la taille N_{MM}.

Par la suite, on note également PDⱼ le pointeur de donnée qui contient l'adresse de la ligne LDⱼ et qui permet de traiter et de manipuler cette ligne de donnée. La structure du pointeur PDⱼ est représentée sur la figure 2. Ici, la taille du pointeur PDⱼ est égale à la taille N_{@} des adresses mémoires. Le pointeur PDⱼ comporte :
- une première plage de bits contenant l'adresse @ⱼ vers laquelle le pointeur PDⱼ pointe, et
- une seconde plage distincte de bits contenant un identifiant IPⱼ du pointeur PDⱼ.
Sur la figure 2, les première et seconde plages de bits sont désignées par les symboles, respectivement, @ⱼ. et IPⱼ. Par la suite, on note @ⱼ l'adresse dans la mémoire 4 à laquelle est enregistrée une ligne LDⱼ.
Les lignes LDⱼ sont enregistrées dans une plage d'adresses de la mémoire 4 dont la taille est strictement inférieure à 2^{N@} afin de laisser suffisamment de place pour coder l'identifiant IPⱼ à l'intérieur du pointeur PDⱼ. Pour cela, la taille de la première plage de bits est inférieure à N_{@}-N_{P} bits, où N_{P} est la taille, en nombre de bits, de la seconde plage. De préférence, la taille N_{P} est supérieure à 8 bits ou 16 bits et, généralement, inférieure à 32 bits ou 54 bits. Ici, la taille N_{P} est égale à 16 bits et les adresses @ⱼ sont donc codées sur moins de 48 bits. Dans ce mode de réalisation, la première plage correspond aux N_{@}-N_{P} bits de poids faibles du pointeur PDⱼ et la seconde plage correspond au N_{P} bits de poids forts du pointeur PDⱼ. Pour obtenir l'adresse @ⱼ de la ligne LDⱼ à partir du pointeur PDⱼ, il suffit donc de masquer les bits de poids forts du pointeur PDⱼ utilisés pour enregistrer l'identifiant IPⱼ.

L'adresse @ⱼ est par exemple une adresse virtuelle dans l'espace mémoire du programme. Une telle adresse virtuelle est ensuite convertie automatiquement en une adresse physique par une unité connue sous l'abréviation MMU ("Management Memory Unit").

L'identifiant IPⱼ est un identifiant qui permet d'identifier de façon unique le pointeur PDⱼ parmi un ensemble d'autres pointeurs utilisés lors de la même exécution du code binaire 30. Ici, il est construit de manière à limiter la probabilité que deux pointeurs de données différents aient le même identifiant de pointeur. Par exemple, les identifiants de pointeurs sont construits pour que cette probabilité soit inférieure à une chance sur dix et, de préférence, une chance sur cinquante ou une chance sur cent ou une chance sur mille.

L'identifiant IPⱼ peut être généré lors de la compilation du code source pour obtenir le code binaire 30. C'est par exemple le cas lorsque le pointeur PDⱼ est déclaré dans le code source. Classiquement, un tel pointeur pointe sur un variable globale ou une variable statique ou une variable locale. Lors de la compilation du code source, pour minimiser la probabilité que deux pointeurs différents aient le même identifiant de pointeur, par exemple, le compilateur génère l'identifiant IPⱼ du pointeur par tirage aléatoire ou pseudo-aléatoire de cet identifiant dans un ensemble EIP. L'ensemble EIP contient toutes les valeurs possibles pour un identifiant de pointeur sauf les valeurs déjà attribuée à un identifiant de pointeur. Dans un autre mode de réalisation, l'identifiant IPⱼ est à chaque fois tirée de façon aléatoire ou pseudo-aléatoire dans l'ensemble EIP. A titre d'illustration, pour faire cela, dans le cas d'un compilateur utilisant LLVM ("Low Level Virtual Machine"), l'instruction "Alloca" est modifiée pour que le pointeur généré au moment de la compilation du code source comporte un identifiant IPⱼ et une adresse @ⱼ. L'instruction "Alloca" génère un pointeur qui pointe typiquement sur une variable locale enregistrée dans la pile 46.

Un pointeur peut aussi être généré lors de l'exécution du code binaire 30. C'est notamment le cas lorsque le code binaire comporte des instructions qui, lorsqu'elles sont exécutées par le microprocesseur 2, alloue dynamiquement une zone de mémoire libre pour y enregistrer des données. Lorsque de telles instructions sont exécutées, elles génèrent un pointeur qui pointe vers la zone de mémoire allouée. Ici, de telles instructions sont exécutées par le microprocesseur 2 lors de l'étape 290 décrite plus loin en référence à la figure 6. De telles instructions sont fréquemment utilisées pour allouer dynamiquement une zone de mémoire dans le tas 48. Par exemple, dans un code source utilisant les librairies standards du langage C, de telles instructions correspondent aux fonctions "malloc()", "calloc()", "realloc()", ...etc. Dans ce cas, ces fonctions "malloc()", "calloc()", "realloc()", ...etc sont modifiées pour que le pointeur PDⱼ qu'elles génères comporte, en plus de l'adresse @ⱼ, l'identifiant IPⱼ. De préférence, chaque exécution d'une telle fonction doit générer un identifiant IPⱼ aussi différent que possible de l'identifiant IPⱼ généré lors de la précédente exécution de cette même fonction. Pour cela, par exemple, à chaque exécution d'une telle fonction :
- l'identifiant IPⱼ est tirée, de façon aléatoire ou pseudo-aléatoire, dans l'ensemble EIP, ou
- l'identifiant IPⱼ est pris égale à l'empreinte numérique obtenue en appliquant une fonction de hachage à l'adresse @ⱼ.

Un tel pointeur PDⱼ qui contient, en plus de l'adresse @ⱼ, d'autres informations, c'est-à-dire ici l'identifiant IPⱼ, est appelé "pointeur enrichi".

Les structures de toutes les lignes LDⱼ destinées à être traitées à l'aide d'un pointeur PDⱼ sont identiques. Cette structure est représentée en détail sur la figure 3 dans le cas particulier de la ligne LDⱼ.

La ligne LDⱼ comporte un cryptogramme CDⱼ*, un code MACⱼ, et un code ECC_{Lj}.

Le cryptogramme CDⱼ* est obtenu en chiffrant une concaténation CDⱼ à l'aide de la clé secrète ka et d'un vecteur d'initialisation ivⱼ. Plus précisément, le cryptogramme CDⱼ* est obtenu à l'aide de la relation suivante : CDⱼ* = fₖₐ(CDⱼ ; ivⱼ), où fₖₐ est une fonction de chiffrement, correspondant à une fonction de déchiffrement fₖₐ⁻¹, préprogrammée dans le module 28. Typiquement, la fonction fₖₐ est une fonction de chiffrement symétrique. Dès lors, la clé ka permettant de déchiffrer le cryptogramme CDⱼ* est préenregistrée dans la mémoire 29 afin de permettre au module 28 de déchiffrer ce cryptogramme CDⱼ*.

Le vecteur ivⱼ est un vecteur dont la valeur dépend de l'adresse @ⱼ et de l'identifiant IPⱼ du pointeur PDⱼ. Dans ce mode de réalisation, le vecteur ivⱼ est codé sur le même nombre de bits que le pointeur PDⱼ.

À cet effet, le module 28 comporte une fonction préprogrammée Fᵢᵥ qui, à chaque adresse @ⱼ et à chaque identifiant IPⱼ, associe une valeur différente du vecteur ivⱼ. Par exemple, la fonction Fᵢᵥ est une fonction de hachage ou de chiffrement. On a donc la relation suivante : ivⱼ = Fᵢᵥ(@ⱼ, IPⱼ).

La concaténation CDⱼ est ici la concaténation de la donnée Dⱼ et d'un code ECC_{Dj}.

Le code ECC_{Dj} est une première étiquette d'intégrité qui permet de vérifier l'intégrité de la ligne LDⱼ. Plus précisément, le code ECC_{Dj} permet de détecter une erreur dans la donnée Dⱼ et, éventuellement, de corriger cette erreur. Par exemple, le code ECC_{Dj} est le code connu sous l'acronyme BCH (Bose, Ray-Chaudhuri, Hocquenghem) qui présente l'avantage d'être particulièrement facile à mettre en œuvre. Toutefois, tout autre code détecteur ou correcteur d'erreur connu peut être mis en œuvre. La taille du code ECC_{Dj} est supérieure ou égale à 1 ou 2 ou 3 bits et, généralement, inférieure à Nᵢₙₛₜ. La taille du code ECC_{Dj} est déterminée en fonction de la robustesse souhaitée. Plus on veut être capable de corriger un nombre de bits erronés important dans la donnée Dⱼ, plus la taille du code ECC_{Dj} sera grande.

Le code MACⱼ, est une seconde étiquette d'intégrité qui permet aussi de vérifier l'intégrité de la ligne LDⱼ. Plus précisément, ici, le code MACⱼ, est un code permettant de vérifier l'intégrité et l'authenticité du cryptogramme CDⱼ*. Ce code est communément appelé « code d'authentification de message » et connu sous l'acronyme MAC (« Message Authentification Code »). Un tel code MACⱼ, est obtenu en construisant une empreinte numérique à partir du cryptogramme CDⱼ*. Cette empreinte numérique comporte normalement moins de bits que le cryptogramme CDⱼ*. Une telle empreinte numérique est plus connue sous le terme anglais de "digest" ou "hash". Cette empreinte numérique est construite à l'aide d'une fonction prédéterminée et de la clé secrète k' connue seulement de l'auteur du code binaire 30 et du microprocesseur 2. Ici, la clé k' est préenregistrée dans la mémoire 29. De plus, dans ce mode de réalisation, le code MACⱼ, est aussi construit à l'aide de l'adresse @ⱼ et de l'identifiant IPⱼ. Par exemple, la fonction prédéterminée est une fonction à sens unique telle qu'une fonction de hachage. Dans ce cas, généralement, l'empreinte numérique est le résultat de l'application de cette fonction de hachage à une combinaison, par exemple une concaténation, du cryptogramme CDⱼ*, de la clé k', de l'adresse @ⱼ et de l'identifiant IPⱼ.

À titre d'exemple, pour générer le cryptogramme CDⱼ* et le code MACⱼ, un algorithme de chiffrement authentifié est utilisé. Cet algorithme de chiffrement authentifié peut être choisi parmi les différents candidats à la compétition CAESAR (« Competition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

Le code ECC_{Lj} est un code correcteur d'erreur qui permet de détecter et de corriger une erreur dans le cryptogramme CDⱼ* et le code MACⱼ. Il est par exemple construit comme décrit dans le cas du code ECC_{Dj}.

La ligne LDⱼ est construite au moment de la génération du code binaire 30 lorsque l'adresse @ⱼ est fixée au moment de la compilation. Dans ce cas, le compilateur génère d'abord l'identifiant IPⱼ du pointeur PDⱼ puis cet identifiant IPⱼ et l'adresse @ⱼ sont utilisés pour construire la ligne LDⱼ.

La ligne LDⱼ peut aussi être construite au cours de l'exécution du code binaire 30. C'est le cas lorsque l'adresse @ⱼ à laquelle doit être enregistrée la ligne LDⱼ est uniquement connue au moment où le code binaire 30 s'exécute. Par exemple, cette situation se rencontre lorsque la ligne LDⱼ est enregistrée dans une zone de mémoire allouée dynamiquement dans le tas 48.

La figure 4 représente un procédé d'exécution du code binaire 30 par le microprocesseur 2.

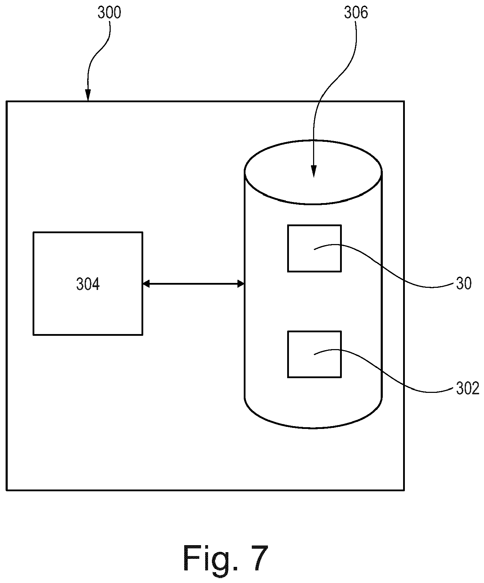

Le procédé débute par une étape 150 de génération puis de fourniture du code binaire 30 dans la mémoire 4. La génération du code binaire 30 est typiquement réalisée par un compilateur tel que celui décrit en référence à la figure 7. La fourniture du code binaire 30 consiste ici ensuite à fournir la copie 40 puis, par exemple, le microprocesseur 2 recopie la copie 40 à l'intérieur de la mémoire 4 pour obtenir le code binaire 30 enregistré dans la mémoire 4. Ainsi, lors de l'étape 150, les lignes LDⱼ construites lors de la compilation du code source et contenues dans le code binaire 30, sont enregistrées dans la mémoire 4 et, généralement, dans la partie 44.

Ensuite, lors d'une phase 152, le microprocesseur 2 exécute le code binaire 30 et, en particulier, le code machine 32.

Éventuellement, l'exécution du code binaire 30 commence par une étape 154 d'authentification de l'auteur de ce code binaire. Si l'authentification a été réussie avec succès, alors le procédé se poursuit par une étape 162. À l'inverse, si l'authentification n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge notamment le cryptogramme ka* contenu dans le bloc 34 et le déchiffre à l'aide de la clé sk_{CPU} contenue dans la mémoire 29. À l'issue de l'étape 162, la clé ka est contenue dans la mémoire 29.

Après l'étape 162, le microprocesseur 2 exécute, les unes après les autres, les instructions du code machine 32.

Dans ce mode de réalisation, la sécurisation des pointeurs de données intervient à chaque fois que l'instruction exécutée par le microprocesseur 2 est une instruction de lecture d'une ligne de donnée LDⱼ dans la mémoire 4 à une adresse @ⱼ spécifiée par le pointeur PDⱼ. Cette instruction de lecture comporte typiquement un opérande qui contient l'adresse à laquelle le pointeur PDⱼ est enregistré dans la mémoire 4.

L'exécution de cette instruction de lecture par le microprocesseur 2 déclenche donc d'abord le chargement dans un registre, lors d'une étape 164, du pointeur PDⱼ.

Ensuite, lors d'une étape 166, le microprocesseur 2 charge, par exemple dans un registre Rⱼ du microprocesseur, la ligne LDⱼ. L'étape 166 comporte l'extraction de l'adresse @ⱼ à partir du pointeur PDⱼ chargé. Par exemple, pour cela, l'adresse @ⱼ est obtenue en masquant les bits de la seconde plage de bits du pointeur PDⱼ. Cette opération de masquage permet d'obtenir la même adresse @ⱼ que si les N_{P} bits de poids forts étaient égaux à zéro. Ensuite, seule l'adresse @ⱼ extraite est transmise à la mémoire 4 par l'intermédiaire du bus d'adresse. En réponse, la mémoire 4 transmet sur le bus de donnée, la ligne LDⱼ.

Ensuite, le module 28 procède à une étape 168 de sécurisation de de la donnée Dⱼ et du pointeur PDⱼ. Pour cela, le module 28 réalise successivement les opérations suivantes.

Lors d'une opération 170, le module 28 vérifie s'il existe une erreur dans le cryptogramme CDⱼ* ou le code MACⱼ à l'aide du code ECC_{Lj} contenu dans la ligne LDⱼ chargée. Par exemple, pour cela, le module 28 construit, à l'aide d'une fonction préprogrammée, du cryptogramme CDⱼ* et du code MACⱼ, un code ECCLⱼ'. Si le code ECC_{Lj}' est différent du code ECC_{Lj}, alors une erreur est détectée. Si une erreur est détectée, le module 28 procède immédiatement à une étape 172.

Lors de l'étape 172, le module 28 déclenche le signalement d'une faute d'exécution.

Ici, en parallèle de l'étape 172, si une erreur est détectée, le module 28 procède à une opération 174. Lors de l'opération 174, il corrige le cryptogramme CDⱼ* et le code MACⱼ, à partir des informations contenues dans le code ECC_{Lj}. À l'issue de l'opération 174, le cryptogramme CDⱼ* corrigé et le code MACⱼ, corrigé sont utilisés à la place, respectivement, du cryptogramme CDⱼ* et du code MACⱼ, contenus dans la ligne LDⱼ.

L'opération 170 permet notamment de détecter et de corriger des fautes introduites dans les lignes de données stockées dans la mémoire 4.

À l'issue de l'opération 174 ou si aucune erreur n'a été détectée lors de l'opération 170, le procédé se poursuit par une opération 176.

Lors de l'opération 176, le module 28 vérifie l'intégrité de la ligne LDⱼ. Ici, il vérifie l'intégrité et l'authenticité du cryptogramme CDⱼ* à l'aide du code MACⱼ. Pour cela, le module 28 construit un code MACⱼ' en utilisant le même algorithme que celui mis en œuvre pour construire le code MACⱼ, sauf qu'il utilise le cryptogramme CDⱼ* chargé lors de l'étape 166. De plus, lors de l'opération 176, le module 28 utilise l'identifiant IPⱼ et l'adresse @ⱼ contenus dans le pointeur PDⱼ chargé lors de l'étape 164. Par exemple, le cryptogramme CDⱼ* est concaténé avec la clé k', l'adresse @ⱼ et l'identifiant IPⱼ. Le code MACⱼ' est alors égal à l'empreinte numérique de cette concaténation. Si le code MACⱼ' ainsi construit est identique au code MACⱼ chargé, alors l'intégrité et l'authenticité du cryptogramme CDⱼ* est confirmée. Dans ce cas, le cryptogramme CDⱼ* est enregistré dans un registre du microprocesseur et le module 28 procède, lors d'une opération 178, à son déchiffrement. Dans le cas contraire, la vérification de l'intégrité de la ligne LDⱼ échoue et le module 28 procède à l'étape 172.

L'opération 176 permet de valider l'intégrité et l'authenticité de la ligne LDⱼ chargée et aussi de valider que, lors de l'opération 174, le cryptogramme CDⱼ* et/ou le code MACⱼ ont correctement été corrigés. L'opération 176 permet donc de détecter un remplacement de la ligne LDⱼ par une nouvelle ligne de donnée construite par un auteur qui ne connaît pas la clé k'. L'opération 176 permet aussi de détecter la permutation de la ligne LDⱼ avec une autre ligne LDₖ enregistrée à une adresse @ₖ différente de l'adresse @ⱼ.

L'opération 176 permet aussi de détecter pratiquement tous les usages erronés d'un pointeur. Par exemple, l'opération 176 détecte une utilisation incorrecte d'un pointeur PDₖ pour lire la ligne LDⱼ ou pour remplacer la ligne LDⱼ par une nouvelle ligne LDₖ. Plus précisément, si un autre pointeur PDₖ, différent du pointeur PDⱼ, est utilisé pour lire la ligne LDⱼ, c'est l'identifiant IPₖ, différent de l'identifiant IPⱼ, contenu dans le pointeur PDₖ qui est utilisé pour construire le code MACⱼ'. Par conséquent, le code MACⱼ' construit est différent du code MACⱼ. Cet usage erroné du pointeur PDₖ déclenche donc le signalement d'une faute d'exécution. Si le pointeur PDₖ est utilisé pour écrire une ligne LDk à la place de la ligne LDⱼ, alors le code MACₖ de la ligne LDk est construit à l'aide de identifiant IPₖ. Ensuite, lors de l'utilisation suivante du pointeur PDⱼ, le code MACⱼ' construit est différent du code MACₖ car c'est l'identifiant IPⱼ, et non pas l'identifiant IPₖ, qui est utilisé. Dès lors, cette utilisation erronée du pointeur PDₖ est aussi détectée. Grâce à cela, les attaques par dépassement de tampon sont détectées.

De même, l'opération 176 permet de détecter l'utilisation du pointeur PDⱼ après que la zone de mémoire contenant la ligne LDⱼ ait été libérée. En effet, typiquement, après la libération de cette zone de mémoire, celle-ci est réutilisée pour y enregistrer d'autres lignes de données. Pour réutiliser cette zone de mémoire, un nouveau pointeur PDₖ est généré puis utilisé pour enregistrer ces autres lignes LDₖ. Ce nouveau pointeur PDₖ comporte un identifiant IPₖ différent de l'identifiant IPⱼ. Ensuite, si le pointeur PDⱼ est utilisé pour lire la ligne LDk, ceci est détecter. En effet, dans ce cas là aussi, le code MACⱼ' construit sera différent du code MACₖ de la ligne LDₖ. Ainsi, l'opération 176 permet de détecter des attaques utilisant des "dangling pointer" ou des attaques du type "use-after-free".

Lors de l'opération 178, le module 28 déchiffre le cryptogramme CDⱼ* en utilisant la clé ka, le vecteur d'initialisation ivⱼ et la fonction fₖₐ⁻¹ pour obtenir la concaténation CDⱼ déchiffrée et donc la donnée Dⱼ et le code ECC_{Dj} déchiffrés. La clé ka est celle qui a été enregistrée dans la mémoire 29 lors de l'étape 162. Lors de l'opération 178, le vecteur ivⱼ est calculé par le module 28 à l'aide de la relation : ivⱼ = Fᵢᵥ(@ⱼ; IPⱼ), où @ⱼ et IPⱼ sont l'adresse et l'identifiant contenus dans le pointeur PDⱼ chargé lors de l'étape 164.

Une fois que le cryptogramme CDⱼ* a été déchiffré, lors d'une opération 180, le module 28 enregistre la donnée Dⱼ déchiffrée et le code ECC_{Dj} déchiffré dans le registre Rⱼ en attendant que cette donnée soit traitée par l'unité 10.

Lorsque la prochaine instruction qui va être exécutée par l'unité 10 est une instruction qui traite la donnée Dⱼ, le module 28 procède à des opérations 184 et 186. Le module 28 identifie que la prochaine instruction à exécuter va traiter la donnée Dⱼ car cette instruction comporte généralement un opérande qui identifie le registre Rⱼ dans lequel est enregistré la donnée Dⱼ.

Lors d'une opération 184, le module 28 vérifie une nouvelle fois l'intégrité de la ligne LDⱼ. Plus précisément, il vérifie s'il existe une erreur dans la donnée Dⱼ contenue dans le registre Rⱼ à l'aide du code ECC_{Dj} également contenue dans ce registre Rⱼ. Cette opération est réalisée de façon similaire à ce qui a été décrit pour l'opération 170. Cette opérations 184 permet de détecter une attaque par injection de faute dans le registre Rⱼ.

Si le module 28 détecte une erreur, alors il procède immédiatement à l'étape 172. De plus, en parallèle, lors d'une opération 186, le module 28 corrige la donnée Dⱼ à l'aide du code ECC_{Dj}. L'opération 186 est similaire à l'opération 174.

On notera aussi que dans un mode de réalisation où l'opération 176 est omise, l'opération 184 permet aussi de détecter les mêmes usages erronés des pointeurs de données que ceux détectables lors de l'opération 176. En effet, la donnée Dⱼ et le code ECC_{Dj} ont été obtenus en déchiffrant le cryptogramme CDⱼ* notamment à l'aide de l'identifiant IPⱼ du pointeur chargé lors de l'étape 164. Dès lors, si le pointeur chargé lors de cette étape n'est pas le pointeur PDⱼ mais un autre pointeur PDₖ différent, la donnée Dⱼ déchiffrée et le code ECC_{Dj} déchiffré lors de l'opération 178 sont incorrects, La vérification de l'intégrité de la ligne LDⱼ lors de l'opération 184 échoue donc.

Ensuite, à l'issue de l'opération 186 ou si aucune erreur n'a été détectée lors de l'opération 184, l'unité 10 exécute l'instruction qui traite la donnée Dⱼ.

En parallèle, à chaque fois que l'unité 10 exécute une instruction qui conduit à enregistrer une nouvelle donnée Dⱼ dans un registre, noté ici Rⱼ, de l'ensemble 12, le module 28 construit la concaténation CDⱼ et l'enregistre dans le registre Rⱼ.

Ultérieurement, l'unité 10 exécute une instruction d'écriture de la donnée Dⱼ contenue dans le registre Rⱼ à l'adresse @ⱼ contenue dans le pointeur PDⱼ.

En réponse, lors d'une opération 192, le module 28 construit la ligne de donnée LDⱼ qui doit être enregistrée à l'adresse @ⱼ. Pour cela, le module 28 :
- calcule le vecteur ivⱼ à l'aide de la relation: ivⱼ = Fᵢᵥ(@ⱼ, IPⱼ), puis
- construit le cryptogramme CDⱼ* à l'aide de la relation CDⱼ* = fₖₐ(CDⱼ ; ivⱼ), puis
- calcule le code MACⱼ à l'aide du cryptogramme CDⱼ*, de la clé k', de l'adresse @ⱼ et de l'identifiant IPⱼ, puis
- calcule le code ECC_{Lj} à l'aide du cryptogramme CDⱼ* et du code MACⱼ, puis
- concatène le cryptogramme CDⱼ*, le code MACⱼ, et le code ECC_{Lj} pour former la ligne LDⱼ.

Ensuite, lors d'une opération 194, le microprocesseur 2 enregistre la ligne LDⱼ construite dans la mémoire 4 à l'adresse @ⱼ. Lors de cette opération, l'adresse @ⱼ est extraite du pointeur PDⱼ comme décrit dans le cas de l'étape 166.

Lors de l'exécution du code binaire, si un usage erronée d'un pointeur de donnée se produit, le microprocesseur 2 signale, lors de l'étape 172, une faute dans l'exécution du code binaire 30. En réponse à un tel signalement, lors d'une étape 200, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code binaire, jusqu'à une mise hors service définitive du microprocesseur 2. Le microprocesseur 2 est considéré comme étant hors service lorsqu'il est définitivement placé dans un état où il est incapable d'exécuter un quelconque code binaire. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code binaire et/ou sa réinitialisation, et
- la suppression du code binaire de la mémoire 4 et/ou la suppression de la copie 40 de sauvegarde et/ou la suppression des données secrètes.

De plus, ici, la contre-mesure mise en œuvre lors de l'étape 200 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 176 ou 184.

Dans ce mode de réalisation, les données qui sont enregistrées dans la mémoire 4 mais qui ne sont pas manipulées à l'aide d'un pointeur sont chiffrées par un procédé conventionnel de chiffrement. Dans cette demande, ces données sont désignées par le symbole Daⱼ. Pour assurer la cohérence des notations, l'adresse à laquelle est enregistrée la donnée Daⱼ dans la mémoire 4 est aussi notée @ⱼ. Par exemple, ici, le procédé mis en œuvre pour chiffrer les données Daⱼ est celui décrit dans le chapitre V de la demande EP34577620A. Dans ces conditions, chaque donnée Daⱼ est enregistrée dans une ligne LDaⱼ de donnée dont la structure est identique à celle de la ligne LDⱼ précédemment décrite. De plus, de préférence, l'adresse @ⱼ de chaque donnée Daⱼ :
- a la même taille que l'adresse @ⱼ contenue dans chaque pointeur PDⱼ, et
- est contenue dans un mot-machine de même taille que le pointeur PDⱼ et dans la même première plage de bits.

Ainsi, l'adresse @ⱼ d'une donnée Daⱼ est contenue dans un opérande qui a la même structure que le pointeur PDⱼ sauf que les bits de la seconde plage de bits sont systématiquement nulles. Dans ces conditions, pour lire et écrire dans la mémoire 4 une donnée Daⱼ, les mêmes étapes que celles décrites ci-dessous dans le cas particulier d'une données Dⱼ sont mises en œuvre. En effet, la seule différence est que dans le cas d'une donnée Daⱼ, pour obtenir son adresse @ⱼ à partir de l'opérande de l'instruction de lecture, il n'est pas nécessaire de masquer la seconde plage de bits de l'opérande puisque celle-ci est systématiquement égale à zéro. Toutefois, le fait d'exécuter l'opération de masquage de la seconde plage de bits ne change rien au résultat et l'adresse @ⱼ de la donnée Daⱼ est correctement obtenue à partir de l'opérande de l'instruction de lecture.

Dans ce mode de réalisation, lorsqu'un pointeur PDⱼ est enregistré dans la mémoire 4 et qu'il n'est pas lui-même manipulé à l'aide d'un autre pointeur, ce pointeur PDⱼ est une donnée Daⱼ et donc traité comme tel. Le pointeur PDⱼ est donc enregistré sous forme chiffré dans la mémoire 4. Par conséquent, lors de l'étape 164, la ligne de donnée codant ce pointeur PDⱼ est chargée et déchiffrée de la même manière que pour une donnée Daⱼ.

Lorsqu'un pointeur PDⱼ est enregistré dans la mémoire 4 et qu'il est lui-même manipulé à l'aide d'un autre pointeur, ce pointeur PDⱼ est une donnée Dⱼ et donc traité comme tel. Ce pointeur PDⱼ est donc lui-aussi enregistré sous forme chiffré dans la mémoire 4. Par contre, lors de l'étape 164, la ligne de donnée codant ce pointeur PDⱼ est chargée et déchiffrée de la même manière que pour une donnée Dⱼ et non pas comme dans le cas d'une donnée Daⱼ. Ainsi, le procédé fonctionne aussi lorsque qu'un pointeur de donnée pointe lui-même sur un autre pointeur de donnée. Cette situation est connue sous le terme de "pointeur de pointeur".

### CHAPITRE IV : SECURISATION DES POINTEURS DE FONCTIONS

Le code machine 32 comporte une succession de lignes d'instruction LIⱼ enregistrées les unes après les autres dans la mémoire 4. Contrairement aux lignes de données LDⱼ décrites précédemment, la ligne LIⱼ code une instruction Iⱼ à exécuter par l'unité 10 et non pas une donnée Dⱼ à traiter. Par la suite, dans ce chapitre, l'indice j est utilisé pour identifier la ligne d'instruction LIⱼ parmi les autres lignes d'instructions du code machine 32. De plus, l'indice j est aussi utilisé comme un numéro d'ordre indiquant dans quel ordre les lignes LIⱼ sont classées. Ainsi, on note LIⱼ₊₁ la ligne d'instruction située immédiatement après la ligne LIⱼ. Chaque ligne d'instruction LIⱼ code une instruction du jeu d'instructions du microprocesseur 2 apte à être exécutée, après avoir été déchiffrée et décodée, par l'unité 10 de ce microprocesseur.

Un code binaire peut comporter des pointeurs de fonction. Contrairement à un pointeur de donnée, un pointeur de fonction contient l'adresse d'une ligne d'instruction contenant une instruction à exécuter par le microprocesseur. Ainsi, lorsqu'un pointeur de fonction est lu cela provoque le chargement de l'adresse qu'il contient dans le compteur ordinal 26. L'exécution du code binaire se poursuit donc par l'exécution de l'instruction pointée par ce pointeur de fonction. Ces pointeurs de fonctions sont donc utilisés pour appeler des routines à partir du code d'une fonction principale. Ces routines sont également appelées "fonctions appelées".

A titre d'illustration, l'usage de telles pointeurs de fonction se rencontre dans les cas suivants :
Cas 1) : Un pointeur de fonction est introduit par le compilateur lorsqu'il rencontre dans le code source certaines instructions particulières. Par exemple, l'instruction "SWITCH" peut entraîner la création par le compilateur d'une table d'association qui, à chaque cas prévu par l'instruction "SWITCH", associe un pointeur de fonction particulier. Lors de l'exécution du code binaire correspondant, le microprocesseur identifie le cas rencontré, puis lit dans la table d'association le pointeur associé à ce cas identifié.
Cas 2) : L'usage de pointeurs de fonctions se rencontre aussi fréquemment dans le contexte de la programmation objet. Dans ce contexte, le code source peut définir une classe d'objets et pour cette classe d'objets plusieurs méthodes. L'appel à ces différentes méthodes d'une classe est alors souvent implémenté dans le code machine en utilisant une mécanisme connu sous le terme de "vtable" ou "virtual method table". Ce mécanisme utilise un table qui à chaque identifiant de méthode associe un pointeur vers la première instruction de cette méthode.
Cas 3) : Lorsqu'une fonction A appelle une fonction B prédéfinie dans une librairie de fonctions pré-enregistrées, une table est utilisée pour associer à l'identifiant de la fonction B, contenu dans le code binaire de la fonction A, un pointeur vers l'adresse de la première instruction de la fonction B. Dans ce cas, généralement, le pointeur vers la fonction B est généré par un chargeur de librairies dynamiques, connu sous l'anglicisme "loader", au moment où débute l'exécution de la fonction A.
Cas 4) : Il est aussi possible de déclarer dans un code source des pointeurs de fonction.

Pour sécuriser ces pointeurs de fonction contre un usage erroné, la structure de ces pointeurs de fonction est identique à celle décrite en référence à la figure 2. Par la suite, on utilise les symboles PF_{f}, IP_{f} et @_{f} pour désigner, respectivement, un pointeur de fonction, l'identifiant de ce pointeur de fonction et l'adresse vers laquelle pointe ce pointeur de fonction. L'indice f est un identifiant de la fonction pointée par le pointeur PF_{f}.

Les pointeurs de fonctions sont générés lors de la compilation du code source et/ou lors de l'exécution du code binaire. Pour cela, les instructions du compilateur et/ou les instructions exécutées par le microprocesseur 2 qui génèrent de telles pointeurs de fonction sont adaptées pour :
- générer l'identifiant IP_{f} qui permet d'identifier de façon unique le pointeur PF_{f} parmi un ensemble d'autres pointeurs de fonctions utilisés lors de la même exécution du code binaire 30, et
- construire et retourner un pointeur PF_{f} contenant l'identifiant IP_{f} et l'adresse @_{f}.

La structure de chaque ligne d'instruction LIⱼ de chaque fonction pointée par un pointeur PF_{f} est représentée dans la figure 5. Cette structure est identique à celle d'une ligne LDⱼ. Toutefois, dans le contexte d'une ligne d'instruction LIⱼ, on utilise les symboles Iⱼ, ECC_{Ij}, CIⱼ et CIⱼ* pour désigner, respectivement, l'instruction codée dans cette ligne, le code correcteur d'erreur associé à cette instruction Iⱼ, la concaténation de l'instruction Iⱼ et du code ECC_{Ij} et le cryptogramme de cette concaténation.

Par la suite le même symbole @ⱼ est utilisé pour désigner l'adresse à laquelle est enregistrée la ligne LIⱼ.

Le code ECC_{Ij} de la ligne LIⱼ est construit comme décrit pour le code ECC_{Dj} sauf que la donnée Dⱼ est remplacée par l'instruction Iⱼ.

Le cryptogramme CIⱼ* est construit comme le cryptogramme CDⱼ* sauf que l'identifiant IPⱼ est remplacé par l'identifiant IP_{f} du pointeur qui pointe vers la fonction qui contient cette ligne LIⱼ. Ainsi, toutes les lignes LIⱼ d'une même fonction adressée à l'aide du pointeur PF_{f} sont chiffrées en utilisant le même identifiant IP_{f}. Le cryptogramme CIⱼ* est donc construit en utilisant la fonction fₖₐ, la clé ka, l'adresse @ⱼ et l'identifiant IP_{f}.

Le code MACⱼ, est construit comme le code MACⱼ, d'une ligne de donnée sauf que le cryptogramme CDⱼ* et l'identifiant IPⱼ sont remplacés par, respectivement, le cryptogramme CIⱼ* et l'identifiant IP_{f}. Le code MACⱼ, de la ligne LIⱼ est donc construit en utilisant le cryptogramme CIⱼ*, la clé k', l'adresse @ⱼ et l'identifiant IP_{f}.

Le code ECC_{Lj} est construit comme le code ECC_{Lj} d'une ligne de donnée sauf que le cryptogramme CDⱼ* est remplacé par le cryptogramme CIⱼ*.

Le vecteur ivⱼ utilisé pour construire la ligne LIⱼ est un vecteur dont la valeur dépend de l'adresse @ⱼ de la ligne LIⱼ et de l'identifiant IP_{f} du pointeur PF_{f}. A cet effet, par exemple, la relation suivante est utilisée : ivⱼ = Fᵢᵥ(@ⱼ, IP_{f}).

La sécurisation des pointeurs de fonction va maintenant être décrite plus en détail en référence au procédé de la figure 6 et dans le cas particulier où elle est mise en œuvre en combinaison avec les enseignements des chapitres précédent. Ici, la sécurisation des pointeurs d'instructions intervient à chaque fois que l'instruction à exécuter est chargée à l'aide d'un pointeur de fonction.

Plus précisément, dans ce cas, lors d'une étape 264, le microprocesseur 2 charge le pointeur PF_{f} dans le compteur ordinal 26.

Ensuite, lors d'une étape 266, le microprocesseur 2 charge successivement chacune des lignes LIⱼ de la fonction appelée en commençant par la ligne Llf enregistrée à l'adresse @_{f} contenue dans le pointeur PF_{f}. Pour cela, l'adresse @_{f} est extraite du pointeur PF_{f} chargé, par exemple, comme décrit dans le cas de l'étape 166. Après cela, l'adresse @_{f} est transmise à la mémoire 4 par l'intermédiaire du bus d'adresse. L'adresse @ⱼ de la ligne LIⱼ suivante est par exemple obtenue en incrémentant le compteur ordinal. Le fait d'incrémenter le compteur ordinal modifie l'adresse qu'il contient mais ne modifie pas l'identifiant IP_{f} contenu dans ce compteur ordinal.

Ensuite, le module 28 procède à une étape 268 de sécurisation de l'instruction et du pointeur PF_{f}. Pour cela, le module 28 réalise successivement des opérations 270, 274, 276, 278, 284 et 286 pour chacune des lignes d'instructions LIⱼ de la fonction appelée à l'aide du pointeur PF_{f}. Ces opérations 270, 274, 276, 278, 284 et 286 sont identiques, respectivement, aux opérations 170, 174, 176, 178, 184 et 186 précédemment décrites sauf que les symboles Dⱼ, ECC_{Dj}, CDⱼ et CDⱼ* sont remplacés par les symboles, respectivement, Iⱼ, ECC_{Ij}, CIⱼ et CIⱼ*.

Après l'opération 278, le module 28 enregistre l'instruction I_{f} et le code ECC_{Ij} déchiffrés dans la file 22. Une fois que l'unité 10 a exécuté toutes les instructions qui précédent l'instruction Iⱼ dans la file 22, c'est-à-dire lorsque l'instruction Iⱼ est la prochaine instruction à exécuter par l'unité 10, le module 28 déclenche l'exécution des opérations 284 et, éventuellement, 286. Puis, lors d'une étape 290, l'unité 10 exécute l'instruction Iⱼ.

### CHAPITRE V : SECURISATION DES POINTEURS INVALIDES

En plus de ce qui a déjà été décrit précédemment, dans un mode de réalisation préférée, les instructions qui libèrent une zone de mémoire sont modifiées pour rendre un pointeur invalide inutilisable. Ici, ces instructions sont exécutées par le microprocesseur 2 lors de l'étape 290.

Par exemple, l'instruction qui libère une zone de mémoire est l'instruction "Free" du langage C. Dans le code source, l'instruction "Free" se présente typiquement sous la forme "Free(PDⱼ)", où "PDⱼ" est le pointeur qui pointe vers la zone de mémoire libérée. Une fois que l'instruction "Free(PDⱼ)" a été exécutée, la zone de mémoire libérée dans la mémoire 4 peut être à nouveau allouée et utilisée pour y stocker d'autres lignes de données LDk.

Après, l'exécution de l'instruction "Free(PDⱼ)", le pointeur PDⱼ est invalide et ne doit donc plus être utilisé pour accéder à cette zone de mémoire libérée.

Ici, pour éviter tout usage du pointeur PDⱼ invalide, l'instruction "Free" est modifiée pour que lorsqu'elle est exécutée, lors de l'étape 290, par le microprocesseur 2, alors l'identifiant IPⱼ du pointeur PDⱼ est aussi modifié. Ainsi, si le pointeur PDⱼ est utilisé en dehors de la période de temps pendant laquelle il est valide, cela déclenche systématique une faute d'exécution. En effet, dans ce cas, même si le pointeur PDⱼ est utilisé pour lire, dans la zone de mémoire libérée, la ligne de code LDⱼ qui avait précédemment été écrite en utilisant ce pointeur PDⱼ, alors la nouvelle valeur de l'identifiant IPⱼ est différente de sa précédente valeur. La vérification, lors de l'opération 176, de l'intégrité de ligne LDⱼ échoue donc.

De plus, l'instruction "Free" peut aussi être modifiée pour effacer les lignes de code écrite dans la zone de mémoire libérée. Par exemple, pour cela, c'est ligne de code sont écrasées avec des valeurs aléatoire ou une valeur nulle. Par exemple, pour cela, les lignes écrites dans la zone de mémoire libérée sont écrites en utilisant la nouvelle valeur de l'identifiant IPⱼ du pointeur PDⱼ.

### CHAPITRE VI : GENERATION DU CODE BINAIRE

La figure 7 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les pointeurs PDⱼ pour les lignes LDⱼ et les pointeurs PF_{f} pour les lignes LI_{f}. Plus précisément, lors de la compilation, le compilateur génère pour chacun de ces pointeurs l'identifiant de pointeur correspondant puis construit la ligne pointée par ce pointeur à l'aide de cet identifiant. La conception et la réalisation d'un tel compilateur sont à la portée de l'homme du métier à partir des explications données dans cette description. Par exemple, pour cela, le compilateur 30 repère et identifie automatiquement les pointeurs et les lignes de code qui sont traitées à l'aide de ces pointeurs. Par exemple, le compilateur 300 est un compilateur utilisant la couche d'abstraction LLVM.

### CHAPITRE VII : VARIANTES :

### Variantes de l'appareil 1 :

D'autres modes de réalisation de l'appareil 1 sont possibles. En particulier, toutes les variantes décrites dans les paragraphes 191 à 194 de la demande EP3457620A1 sont applicables ici.

Dans le cas où seule la sécurisation des pointeurs de données est mise en œuvre, le module 28 peut être remplacé par un module logiciel qui, lorsqu'il est exécuté par l'unité 10, réalise les mêmes fonctions et opérations que celles décrites pour le module 28.

### Variantes de la sécurisation des pointeurs de données :

Les différentes variantes décrites dans le chapitre "Variantes de la sécurisation des données" de la demande EP3457620A1 peuvent être transposées sans difficulté dans le contexte de la présente demande. En particulier, le code ECC_{Dj} peut être remplacé par un simple code détecteur d'erreur permettant seulement de détecter une erreur dans la donnée Dⱼ. Un code détecteur d'erreur ne permet pas de corriger l'erreur détectée. Dans ce cas, l'opération 186 de correction de l'erreur est omise.

Dans une variante simplifiée, le code ECC_{Dj} est omis. Dans ce mode de réalisation, le microprocesseur 2 n'est plus capable de détecter une erreur dans le déchiffrement du cryptogramme CDⱼ* ou une modification de la donnée Dⱼ qui interviendrait après son déchiffrement et avant son utilisation par l'unité 10. Dans ce cas, les opérations 184 et 186 sont omises.

Dans les modes de réalisation décrits jusqu'à présent, à la fois la donnée Dⱼ et le code ECC_{Dj} sont chiffrés en fonction du vecteur ivⱼ. En variante, soit seulement la donnée Dⱼ soit seulement le code ECC_{Dj} est chiffré en fonction du vecteur ivⱼ. Par exemple, dans la ligne de donnée, le cryptogramme de la donnée Dⱼ est obtenu à partir d'une fonction de chiffrement qui n'utilise pas le vecteur ivⱼ, tandis que le cryptogramme ECC_{Dj}* du code ECC_{Dj} est obtenu à l'aide de la fonction de chiffrement fₖₐ(ECC_{Dj} ; ivⱼ). Dans ce cas, lors de l'opération 178, le module 28 déchiffre le cryptogramme de la donnée Dⱼ sans utiliser le vecteur ivⱼ et déchiffre le cryptogramme ECC_{Dj}* en utilisant ce vecteur ivⱼ. Ensuite, le reste du procédé est identique à ce qui a déjà été décrit. Dans un mode de réalisation simplifié, puisque la donnée Dⱼ n'a pas besoin d'être chiffrée en fonction du vecteur ivⱼ, il est aussi possible de ne pas la chiffrer. Par exemple, la ligne de donnée contient alors la donnée Dⱼ en clair et le cryptogramme ECC_{Dj}*. Dès lors, lors de l'opération 178, le déchiffrement de la donnée Dⱼ est omis puisqu'il suffit de l'extraire de la plage de bits dans laquelle elle est contenue dans la ligne LDⱼ.

A l'inverse, il est aussi possible de modifier la structure des lignes LDⱼ de manière à ce que seule la donnée Dⱼ soit chiffrée en fonction du vecteur ivⱼ. Par exemple, la ligne LDⱼ comporte un cryptogramme Dⱼ* de la donnée Dⱼ obtenue en la chiffrant à l'aide de la fonction fₖₐ(Dⱼ ; ivⱼ) et un cryptogramme ECC_{Dj}* obtenu en chiffrant le code ECC_{Dj} à l'aide d'une fonction de chiffrement indépendante du vecteur ivⱼ. Lors de l'opération 178, le module 28 déchiffre le cryptogramme Dⱼ* à l'aide du vecteur ivⱼ et déchiffre le cryptogramme ECC_{Dj}* sans utiliser ce vecteur ivⱼ. Dans ce cas, le code ECC_{Dj} peut aussi ne pas être chiffré et être contenu en clair dans la ligne LDⱼ.

Dans une variante simplifiée, le cryptogramme CDⱼ* est construit sans utiliser l'identifiant IPⱼ et/ou sans utiliser l'adresse @ⱼ contenus dans le pointeur PDⱼ. Lorsque l'identifiant IPⱼ n'est pas utilisé pour construire le cryptogramme CDⱼ*, alors seul le code MACⱼ permet de détecter un usage erroné du pointeur PDⱼ.

De nombreux modes de réalisation de la fonction fₖₐ sont possibles. Par exemple, la fonction fₖₐ peut être aussi simple qu'une simple opération « OU Exclusif » logique entre la concaténation CDⱼ et le vecteur ivⱼ.

Le chiffrement et le déchiffrement ont été décrits dans le cas particulier où les fonctions fₖₐ et fₖₐ⁻¹ sont des algorithmes de chiffrement qui utilisent un "vecteur d'initialisation" et, de préférence, aussi une clé secrète ka. Toutefois, les fonctions fₖₐ et fₖₐ⁻¹ peuvent aussi être des algorithmes de chiffrement/déchiffrement dans lesquels un vecteur d'initialisation n'est pas utilisé. Tout ce qui a été décrit ici s'applique alors à l'identique à un tel algorithme de chiffrement/déchiffrement en remplaçant simplement le terme "vecteur d'initialisation" par le terme "clé".

Dans une autre variante, les clés ka et k' sont les mêmes.

En variante, la fonction Fᵢᵥ est identique à la fonction fₖₐ sauf qu'elle est appliquée à l'adresse @ⱼ et à l'identifiant IPⱼ. La fonction Fᵢᵥ peut aussi utiliser le même algorithme de chiffrement que la fonction fₖₐ mais avec une clé de chiffrement différente de la clé ka.

Dans une variante simplifiée, la fonction Fᵢᵥ est la fonction identité. Dans ce cas, le vecteur ivⱼ est systématiquement égal au pointeur PDⱼ.

Le code ECC_{Lj} peut être remplacé par un simple code détecteur d'erreur Dans ce cas, l'opération 174 de correction est omise. Dans une autre variante, le code ECC_{Lj} est construit de manière à permettre la détection d'une erreur, soit seulement dans le cryptogramme CDⱼ* soit seulement dans le code MACⱼ.

Le code ECC_{Lj} peut être omis. Dans ce cas, une erreur dans le cryptogramme CDⱼ* ou dans le code MACⱼ, est détectée uniquement lors de l'exécution de l'opération 176 de vérification de l'intégrité et de l'authenticité du cryptogramme. La détection d'une erreur à l'aide d'un code MAC est généralement plus complexe qu'à l'aide d'un simple code détecteur d'erreur ou d'un simple code correcteur d'erreur. De plus, lorsque le code ECC_{Lj} est omis, dans le cas où il existe une erreur dans le cryptogramme CDⱼ* ou le code MACⱼ, il n'est pas possible de corriger cette erreur. Dans ce dernier cas, par exemple, l'exécution de la fonction sécurisée est donc systématiquement interrompue en cas d'erreur.

En variante, l'opération 176 se poursuit systématiquement par l'opération 178 même si l'intégrité ou l'authenticité du cryptogramme n'a pas pu être confirmée. Dans ce cas, l'opération 176 sert à déclencher le signalement d'une faute d'exécution sans interrompre l'exécution du code binaire.

Pour détecter un usage erroné du pointeur PDⱼ, un seul du code MACⱼ, et du code ECC_{Dj} est nécessaire. Ainsi, dans un mode de réalisation simplifié, le code MACⱼ, est omis et l'étape 176 est omise. Dans un autre mode de réalisation simplifié, c'est le code ECC_{Dj} qui est omis et les étapes 184 et 186 sont omises.

Le nombre de bits et l'emplacement des bits de la seconde plage de bits du pointeur PDⱼ peuvent être modifiés. Par exemple, la seconde plage de bits correspond aux bits de poids faibles du pointeur PDⱼ. Dans ce cas, il faut adapter le masque utilisé pour extraire, respectivement, l'identifiant IPⱼ et l'adresse @ⱼ dans le pointeur PDⱼ.

En variante, le pointeur PDⱼ peut comporter une troisième plage de bits codant, par exemple, des titres d'accès à la ligne LDⱼ. Typiquement, ces titres d'accès sont ensuite comparés à des droits d'accès pré-enregistrés dans le microprocesseur 2 lors de l'exécution du code binaire 30. L'accès en lecture ou en écriture à la ligne LDⱼ est autorisé uniquement si les droits d'accès du microprocesseur 2 correspondent aux titres d'accès contenus dans le pointeur PDⱼ.

Ce qui a été décrit ici n'est pas nécessairement mis en œuvre pour tous les pointeurs de données. Par exemple, pour certains pointeurs de données, la sécurisation est désactivée. Pour cela, l'identifiant IPⱼ est remplacé dans le pointeur PDⱼ par une valeur nulle. L'activation et/ou la désactivation de la sécurisation de certains pointeurs de données sont par exemple programmées en ajoutant une instruction spécifique d'activation, et en alternance de désactivation, associée à ce pointeur de données dans le code source.

Dans d'autres modes de réalisation, la sécurisation des pointeurs de données est uniquement mise en œuvre pour des lignes de données enregistrées dans une partie spécifique de la mémoire 4. Par exemple, la sécurisation des pointeurs est uniquement mise en œuvre pour les pointeurs pointant vers des données enregistrées dans la pile 46. Pour cela, seule l'instruction « Alloca » du compilateur LLVM est modifiée pour renvoyer un pointeur PDⱼ contenant l'identifiant IPⱼ. De façon similaire, ce qui a été décrit peut être mis en œuvre seulement pour les pointeurs pointant vers une ligne de donnée enregistrée dans le tas 48. Dans ce cas, seule l'instruction d'allocation dynamique de mémoire dans le tas 48 est modifiée pour retourner un pointeur enrichi. Il est aussi possible de sécuriser uniquement les pointeurs pointant vers une donnée enregistrée dans la partie 44 de la mémoire 4.

La sécurisation des pointeurs de données peut être omise ou désactivée. Dans ce cas, seule la sécurisation des pointeurs de fonctions est mise en œuvre. Pour cela, par exemple, tous les identifiants de pointeurs de données ont une valeur nulle.

### Variantes de la sécurisation des pointeurs de fonctions :

Toutes les variantes décrites ci-dessus dans le cas particulier d'un pointeur de données peuvent être transposées sans difficulté au cas d'un pointeur de fonction. Par exemple, pour cela, dans chacune des variantes décrites ci-dessus, il suffit de remplacer les symboles Dⱼ, LDⱼ, CDⱼ, CDⱼ* par, respectivement, les symboles Iⱼ, LIⱼ et CIⱼ, CIⱼ*.

La sécurisation des pointeurs de fonctions peut être omise ou désactivée. Dans ce cas, seule la sécurisation des pointeurs de données est mise en œuvre. Pour cela, par exemple, tous les identifiants de pointeurs de fonctions ont une valeur nulle.

En réponse à l'exécution de l'instruction "Free(PDⱼ), il est possible, soit de modifier uniquement la valeur de l'identifiant IPⱼ, soit uniquement d'effacer les données dans la zone de mémoire libérée.

La sécurisation des pointeurs invalides peut être omises dans un mode de réalisation simplifié.

### Variantes communes aux différents chapitres précédents

Les données Daⱼ peuvent être chiffrées et déchiffrées par n'importe quel procédé et pas nécessairement par le procédé de la demande EP3457620A. Dans un mode de réalisation très simplifié, les données Daⱼ ne sont pas chiffrées.

Les instructions Iaⱼ qui n'appartiennent pas à des fonctions appelées à l'aide d'un pointeur de fonction sont, de préférence, chiffrées. Par exemple, le procédé décrit dans la demande EP3457620A peut être mis en œuvre pour cela.

Ce qui a été décrit ici s'applique aussi dans un contexte où aucun mécanisme de mémoire virtuelle n'est implémenté. Dans ce cas, aucune adresse virtuelle n'est utilisée et seule les adresses physiques sont utilisées.

La clé ka peut être pré-enregistrée dans la mémoire 29. Dans ce cas, le cryptogramme ka* peut être omis du bloc 34.

Le cryptogramme k'* de la clé k' chiffrée avec la clé publique pk_{CPU} peut être enregistré dans le bloc 34. Dans ce cas, la clé k' n'a pas besoin d'être pré-enregistrée dans la mémoire 29.

Une ligne de code peut être plus longue qu'un mot-machine. Dans ce cas, chaque ligne de code se compose de plusieurs mots-machine généralement situés à des adresses mémoires immédiatement consécutives dans la mémoire 4. Dans ce cas, une ligne de code est chargée dans le microprocesseur 2 non pas en une seule opération de lecture, mais en exécutant plusieurs opérations de lecture. Chaque opération de lecture charge dans le microprocesseur un mot-machine respectif de la ligne de code.

Tous les modes de réalisation décrits dans ce texte et, en particulier, les différentes variantes, peuvent être combinés entre eux.

### CHAPITRE VIII : AVANTAGES DES MODES DE RÉALISATION DÉCRITS :

Les modes de réalisation décrits ici permettent de déclencher le signalement d'une faute d'exécution dès qu'un second pointeur PDₖ est utilisé pour lire ou écrire une ligne de code seulement destinée à être lue à l'aide d'un premier pointeur PDⱼ dont l'identifiant IPⱼ est différent de l'identifiant IPₖ. Ceci est expliqué dans le cas d'un pointeur de donnée mais les explications données ci-dessous se transposent sans difficulté au cas d'un pointeur de fonction. Lors de la lecture de la ligne LDⱼ à l'aide du pointeur PDₖ, c'est l'identifiant IPₖ de ce pointeur PDₖ qui est utilisé lors de la construction de la seconde étiquette d'intégrité MACⱼ' ou ECC_{Dj}'. Dès lors, la seconde étiquette d'intégrité construite ne correspond pas à la première étiquette d'intégrité MACⱼ ou ECC_{Dj} contenue dans cette ligne LDⱼ et construite à l'aide de l'identifiant IPⱼ. La vérification de l'intégrité de la ligne de donnée échoue donc systématiquement et une faute d'exécution est signalée. Les procédés décrits permettent donc de signaler toute tentative de lecture de la ligne LDⱼ à l'aide du pointeur PDₖ au lieu du pointeur PDⱼ. Grâce à cela, il est possible de détecter des attaques qui utilisent des pointeurs invalides, comme les « dangling pointers ».

De plus, les modes de réalisation décrits permettent aussi de détecter et de signaler les attaques par dépassement de tampons comme les attaques du type « stack overflow attack » ou « stack underflow attack ». Dans ces attaques, le pointeur PDₖ est utilisé pour écrire une nouvelle ligne LDk à la place de la ligne LDⱼ. Ce remplacement de la ligne LDⱼ par la ligne LDk est alors détecté et signalé au moment où le microprocesseur 2 lit la ligne LDₖ en utilisant pour cela le pointeur PDⱼ.

Le fait de construire le cryptogramme CDⱼ* à l'aide de l'identifiant IPⱼ du premier pointeur PDⱼ permet de conserver la donnée Dⱼ secrète lors d'une tentative de lecture de la ligne LDⱼ en utilisant le second pointeur PDₖ. En effet, lorsque le pointeur PDₖ est utilisé pour lire la ligne LDⱼ, c'est l'identifiant IPₖ et non pas l'identifiant IPⱼ qui est utilisé pour déchiffrer le cryptogramme CDⱼ*. Cela ne permet pas d'obtenir la donnée Dⱼ en clair.

Le fait de construire la première étiquette d'intégrité MACⱼ, ou de chiffrer la première étiquette d'intégrité ECC_{Dj}, en plus, en utilisant l'adresse contenue dans la première plage de bits du pointeur PDⱼ permet de détecter et de signaler un déplacement non intentionnel de la ligne LDⱼ dans la mémoire. Cela permet notamment de détecter la permutation de la ligne LDⱼ avec une autre ligne LDk.

L'utilisation de la clé secrète ka pour construire les cryptogrammes CDⱼ* permet d'accroître la sécurité du procédé.

Le fait que la taille du pointeur PDⱼ soit égale à la taille d'une adresse permet de charger et de manipuler ce pointeur enrichi comme une adresse classique et donc en un minimum d'instructions. En particulier, il n'est pas nécessaire d'ajouter des instructions supplémentaires pour lire ou écrire l'identifiant du pointeur dans la mémoire 4.

La génération du premier pointeur en réponse à l'exécution d'une instruction d'allocation dynamique d'une zone mémoire permet de mettre en œuvre le procédé décrit dans le cas où la mémoire est allouée dynamiquement au cours de l'exécution du code binaire.

La modification de l'identifiant du premier pointeur lorsque la zone de mémoire sur laquelle il pointe est libérée, rend très difficile tout usage ultérieur de ce premier pointeur pour lire des données dans cette zone mémoire.

L'enregistrement, dans la mémoire 4, du premier pointeur sous forme chiffrée accroît la sécurité du procédé d'exécution.

Le fait que le pointeur PDⱼ soit enregistré dans une ligne LDaⱼ construite de la même manière que la ligne LDⱼ, mais en utilisant un identifiant de pointeur systématiquement égal à zéro, permet de mettre en œuvre les mêmes étapes pour lire et écrire ce pointeur PDⱼ dans la mémoire 4, que celle mise en œuvre pour lire et écrire la ligne LDⱼ. Cela simplifie donc l'implémentation et l'exécution du code binaire 30.

Par ailleurs, le chiffrement des instructions Iⱼ permet de garantir la confidentialité du code binaire 30, ce qui rend le « Reverse Engineering » du code binaire très difficile. La vérification de l'intégrité du cryptogramme CIⱼ* ou CDⱼ* permet de détecter les modifications du code binaire provoquées, par exemple, par des attaques telles que l'injection de fautes dans la mémoire 4. Le fait de vérifier l'authenticité des instructions et des données permet de détecter et de rendre très difficile l'ajout d'instructions supplémentaires dans le code binaire 30 par un attaquant, par exemple, pour y introduire des logiciels malveillants tels que des virus. En effet, même si l'attaquant connaît l'algorithme utilisé pour chiffrer les instructions Iⱼ et les données Dⱼ, il ne connaît pas la clé secrète k' utilisée pour construire le code MACⱼ.

Le fait que le code ECC_{Ij} ou ECC_{Dj} soit un code correcteur d'erreur et pas seulement un code détecteur d'erreur, permet de rendre le procédé d'exécution plus robuste vis-à-vis des attaques par injection de fautes. En effet, dans ce cas, le code correcteur d'erreur permet souvent de corriger l'erreur introduite dans l'instruction Iⱼ ou dans la donnée Dⱼ de sorte que malgré la présence de telles erreurs, la fonction sécurisée continue de s'exécuter correctement.

L'utilisation du code ECC_{Lj} permet de détecter plus rapidement une erreur dans le cryptogramme CI_{j*} ou CDⱼ* ou dans le code MACⱼ, que si seul le code MACⱼ, était utilisé pour cela. L'utilisation du code ECC_{Lj} permet donc d'accélérer l'exécution du code binaire.

L'utilisation d'un code correcteur d'erreur pour le code ECC_{Lj} permet de rendre le procédé revendiqué plus robuste vis-à-vis des attaques par injection de fautes dans la mémoire 4 ou dans le support 6. En effet, dans ce cas, le code correcteur d'erreur permet souvent de corriger le cryptogramme CIⱼ* ou CDⱼ* ou le code MACⱼ, de sorte que malgré la présence de telles erreurs, la fonction sécurisée s'exécute correctement.

## Revendications

1. Procédé d'exécution d'un code binaire d'une fonction sécurisée par un microprocesseur, ce procédé comportant les étapes suivantes :
a) l'enregistrement (150, 194) dans une mémoire d'une ligne de code, cette ligne de code comportant un cryptogramme du code et une première étiquette d'intégrité permettant de vérifier l'intégrité de la ligne de code,
b) l'obtention (150, 290), par le microprocesseur, d'un premier pointeur contenant l'adresse à laquelle est enregistrée cette ligne de code, puis
c) l'exécution, par le microprocesseur, d'une instruction de lecture de cette ligne de code à l'aide du premier pointeur et, pour cela, l'exécution des opérations suivantes par le microprocesseur :
c1) le chargement (164, 264) du premier pointeur dans un registre du microprocesseur,
c2) le chargement (166, 266) de la ligne de code enregistrée à l'adresse contenue dans le premier pointeur, puis
c3) la vérification (176, 184, 276, 284) de l'intégrité de la ligne de code chargée, cette vérification comportant la construction d'une seconde étiquette d'intégrité à partir du cryptogramme contenu dans la ligne de code chargée, puis la comparaison de cette seconde étiquette d'intégrité à la première étiquette d'intégrité contenue dans la ligne de code chargée, puis
c4) lorsque la seconde étiquette d'intégrité ne correspond pas à la première étiquette d'intégrité, c'est-à-dire que la vérification de l'intégrité de la ligne de code chargée échoue, le microprocesseur déclenche (172) systématiquement le signalement d'une faute d'exécution, et
c5) lorsque la seconde étiquette d'intégrité correspond à la première étiquette d'intégrité, c'est-à-dire que la ligne de code chargée est intègre, le cryptogramme du code est déchiffré (178, 278) pour obtenir un code en clair et le déclenchement d'une faute d'exécution est inhibé ;
**caractérisé en ce que** :
- l'obtention (150, 290) du premier pointeur comporte l'obtention d'un premier pointeur comprenant :
- une première plage de bits contenant l'adresse de la ligne de code, et
- une seconde plage différente de bits contenant un identifiant du premier pointeur, l'identifiant de ce premier pointeur permettant d'identifier de façon unique ce premier pointeur parmi un ensemble contenant plusieurs pointeurs différents mis en œuvre lors de la même exécution du code binaire par ce microprocesseur,
- l'enregistrement (150, 194) de la ligne de code comporte l'enregistrement d'une ligne de code dans laquelle la première étiquette d'intégrité est construite ou chiffrée à l'aide de l'identifiant du premier pointeur,
- lors du chargement (166, 266) de la ligne de code, c'est l'adresse contenue dans la première plage de bits du premier pointeur chargé qui est utilisée et l'identifiant du premier pointeur contenu dans la seconde plage de bits n'est pas utilisé,
- lors de la vérification (176, 184, 276, 284) de l'intégrité de la ligne de code chargée, la seconde étiquette d'intégrité est construite, en plus, en utilisant l'identifiant du premier pointeur contenu dans la seconde plage de bits du premier pointeur chargé, de sorte que si un second pointeur, différent du premier pointeur, est utilisé à la place du premier pointeur pour lire ou écrire cette ligne de code, la vérification de l'intégrité de la ligne de code échoue.

2. Procédé selon la revendication 1, dans lequel :
- l'enregistrement (150, 194) de la ligne de code comporte l'enregistrement d'une ligne de code dans laquelle le cryptogramme est construit à l'aide de l'identifiant du premier pointeur contenu dans la seconde plage de bits, et
- lors du déchiffrement (178, 278) du cryptogramme du code, le cryptogramme est déchiffré en utilisant l'identifiant de pointeur contenu dans la seconde plage de bits du premier pointeur chargé.

3. Procédé selon l'une quelconque des revendications précédentes, dans lequel :
- l'enregistrement (150, 194) de la ligne de code comporte l'enregistrement d'une ligne de code dans laquelle la première étiquette d'intégrité est aussi construite ou chiffrée à l'aide de l'adresse contenue dans la première plage de bits du premier pointeur, et
- lors de la vérification (176, 184, 276, 284) de l'intégrité de la ligne de code chargée, la seconde étiquette d'intégrité est construite, en plus, en utilisant l'adresse contenue dans la première plage de bits du premier pointeur chargé.

4. Procédé selon l'une quelconque des revendications précédentes, dans lequel :
- l'enregistrement (150, 194) de la ligne de code comporte l'enregistrement d'une ligne de code dans laquelle le cryptogramme est aussi construit à l'aide d'une clé secrète indépendante de l'identifiant du premier pointeur et de l'adresse contenue dans ce premier pointeur, et
- lors du déchiffrement (178, 278) du cryptogramme, le cryptogramme est aussi déchiffré en utilisant cette clé secrète stockée dans une mémoire sécurisée du microprocesseur avant le début de l'exécution du code binaire par ce microprocesseur.

5. Procédé selon l'une quelconque des revendications précédentes, dans lequel l'obtention (150, 290) du premier pointeur comporte l'obtention d'un premier pointeur dont la taille, en nombre de bits, est égale à la taille d'une adresse, c'est-à-dire au nombre de bits maximal que peut contenir une adresse transférée du microprocesseur jusqu'à la mémoire par l'intermédiaire d'un bus d'adresse.

6. Procédé selon l'une quelconque des revendications précédentes, dans lequel l'enregistrement (194) de la ligne de code comporte l'enregistrement d'une ligne de code dans laquelle le code est une donnée et l'étape a) comporte, en réponse à l'exécution, par le microprocesseur, d'une instruction d'écriture de cette donnée dans la mémoire à l'adresse contenue dans le premier pointeur :
- la construction (192) de la ligne de code comportant le cryptogramme de la donnée et la première étiquette d'intégrité construite ou chiffrée à l'aide de l'identifiant du premier pointeur contenu dans sa seconde plage de bits, puis
- l'enregistrement (194) de la ligne de code ainsi construite à l'adresse contenue dans la première plage de bits du premier pointeur.

7. Procédé selon la revendication 6, dans lequel l'étape b) précède l'étape a) et l'étape b) comporte :
b1) l'exécution (290) par le microprocesseur d'une instruction d'allocation dynamique d'une zone mémoire dans la mémoire, cette instruction d'allocation étant contenue dans le code binaire de la fonction sécurisée, puis
b2) en réponse :
- la réservation dans la mémoire, d'une zone libre d'une taille prédéterminée, dans laquelle le microprocesseur peut écrire et lire des lignes de codes, et
- la génération du premier pointeur qui contient, dans sa première plage de bits, une adresse de la zone mémoire réservée et dans sa seconde plage de bits l'identifiant du premier pointeur.

8. Procédé selon la revendication 7, dans lequel en réponse à l'exécution (290), par le microprocesseur, d'une instruction de libération de la zone de mémoire allouée vers laquelle le premier pointeur pointe, l'identifiant du premier pointeur est modifié et/ou le contenu de cette zone de mémoire est réécrit avec des valeurs différentes.

9. Procédé selon l'une quelconque des revendications précédentes, dans lequel l'opération c1) (164) comporte :
- l'exécution, par le microprocesseur, d'une instruction de chargement, à partir de la mémoire, d'une ligne de donnée contenant un cryptogramme du premier pointeur, puis
- le déchiffrement du cryptogramme du premier pointeur pour obtenir le premier pointeur en clair.

10. Procédé selon la revendication 9, dans lequel la ligne de donnée contenant le cryptogramme du premier pointeur est construite de la même manière que la ligne de code enregistrée à l'adresse contenue dans ce premier pointeur mais en remplaçant l'identifiant du premier pointeur par une valeur nulle.

11. Procédé selon l'une quelconque des revendications précédentes, dans lequel l'enregistrement (150, 152) de la ligne de code comporte l'enregistrement d'une ligne de code dans laquelle le code est la première instruction exécutable d'une routine appelée par le microprocesseur et le procédé comporte :
- l'exécution (290), par le microprocesseur, d'une instruction d'appel de cette routine, puis
- en réponse, l'étape b) comporte le chargement (264) du premier pointeur à partir d'une table pré-enregistrée associant un identifiant de cette routine au premier pointeur, puis
- pour chaque ligne d'instruction de la routine, l'exécution de l'opération c3) (276) en utilisant à chaque fois l'identifiant du premier pointeur chargé pour construire la seconde étiquette d'intégrité.

12. Code binaire d'une fonction sécurisée apte à être exécuté par un microprocesseur, en mettant en œuvre un procédé d'exécution conforme à l'une quelconque des revendications précédentes, dans lequel le code binaire comporte :
- une ligne de code comportant le cryptogramme du code et une première étiquette d'intégrité permettant de vérifier l'intégrité de la ligne de code ;
- un premier pointeur contenant l'adresse à laquelle est enregistrée la ligne de code,
- une instruction de lecture de la ligne de code à l'aide du premier pointeur qui, lorsqu'elle est exécutée par le microprocesseur, déclenche l'exécution des opérations suivantes par le microprocesseur :
c1) le chargement du premier pointeur dans un registre du microprocesseur,
c2) le chargement de la ligne de code enregistrée à l'adresse contenue dans le premier pointeur, puis
c3) la vérification de l'intégrité de la ligne de code chargée, cette vérification comportant la construction d'une seconde étiquette d'intégrité à partir du cryptogramme contenu dans la ligne de code chargée, puis la comparaison de cette seconde étiquette d'intégrité à la première étiquette d'intégrité contenue dans la ligne de code chargée, puis
c4) lorsque la seconde étiquette d'intégrité ne correspond pas à la première étiquette d'intégrité, c'est-à-dire que la vérification de l'intégrité de la ligne de code chargée échoue, le microprocesseur déclenche systématiquement le signalement d'une faute d'exécution, et
c5) lorsque la seconde étiquette d'intégrité correspond à la première étiquette d'intégrité, c'est-à-dire que la ligne de code chargée est intègre, le cryptogramme du code est déchiffré pour obtenir un code en clair et le
déclenchement d'une faute d'exécution est inhibé ;
**caractérisé en ce que** :
- le premier pointeur comprend :
- une première plage de bits contenant l'adresse de la ligne de code, et
- une seconde plage différente de bits contenant un identifiant du premier pointeur, l'identifiant de ce premier pointeur permettant d'identifier de façon unique ce premier pointeur parmi un ensemble contenant plusieurs pointeurs différents mis en œuvre lors de la même exécution du code binaire par ce microprocesseur, et
- la première étiquette d'intégrité est construite ou chiffrée à l'aide de l'identifiant du premier pointeur.

13. Support d'enregistrement d'informations, lisible par un microprocesseur, **caractérisé en ce que** ce support d'enregistrement d'information comporte un code binaire conforme à la revendication 12.

14. Microprocesseur (2) pour la mise en œuvre d'un procédé conforme à l'une quelconque des revendications 1 à 11, ce microprocesseur étant configuré pour exécuter les étapes suivantes :
a) l'enregistrement dans une mémoire d'une ligne de code, cette ligne de code comportant un cryptogramme du code et une première étiquette d'intégrité permettant de vérifier l'intégrité de la ligne de code,
b) l'obtention, par le microprocesseur, d'un premier pointeur contenant l'adresse à laquelle est enregistrée cette ligne de code, puis
c) l'exécution, par le microprocesseur, d'une instruction de lecture de cette ligne de code à l'aide du premier pointeur et, pour cela, l'exécution des opérations suivantes par le microprocesseur :
c1) le chargement du premier pointeur dans un registre du microprocesseur,
c2) le chargement de la ligne de code enregistrée à l'adresse contenue dans le premier pointeur, puis
c3) la vérification de l'intégrité de la ligne de code chargée, cette vérification comportant la construction d'une seconde étiquette d'intégrité à partir du cryptogramme contenu dans la ligne de code chargée, puis la comparaison de cette seconde étiquette d'intégrité à la première étiquette d'intégrité contenue dans la ligne de code chargée, puis
c4) lorsque la seconde étiquette d'intégrité ne correspond pas à la première étiquette d'intégrité, c'est-à-dire que la vérification de l'intégrité de la ligne de code chargée échoue, le microprocesseur déclenche systématiquement le signalement d'une faute d'exécution, et
c5) lorsque la seconde étiquette d'intégrité correspond à la première étiquette d'intégrité, c'est-à-dire que la ligne de code chargée est intègre, le cryptogramme du code est déchiffré pour obtenir un code en clair et le déclenchement d'une faute d'exécution est inhibé ;
**caractérisé en ce que** le microprocesseur est également configuré pour :
- lors de l'obtention du premier pointeur, obtenir un premier pointeur comprenant :
- une première plage de bits contenant l'adresse de la ligne de code, et
- une seconde plage différente de bits contenant un identifiant du premier pointeur, l'identifiant de ce premier pointeur permettant d'identifier de façon unique ce premier pointeur parmi un ensemble contenant plusieurs pointeurs différents mis en œuvre lors de la même exécution du code binaire par ce microprocesseur,
- lors de l'enregistrement de la ligne de code, l'enregistrement d'une ligne de code dans laquelle la première étiquette d'intégrité est construite ou chiffrée à l'aide de l'identifiant du premier pointeur,
- lors du chargement de la ligne de code, c'est l'adresse contenue dans la première plage de bits du premier pointeur chargé qui est utilisée et l'identifiant du premier pointeur contenu dans la seconde plage de bits n'est pas utilisé,
- lors de la vérification de l'intégrité de la ligne de code chargée, la seconde étiquette d'intégrité est construite, en plus, en utilisant l'identifiant du premier pointeur contenu dans la seconde plage de bits du premier pointeur chargé, de sorte que si un second pointeur, différent du premier pointeur, est utilisé à la place du premier pointeur pour lire ou écrire cette ligne de code, la vérification de l'intégrité de la ligne de code échoue.

15. Compilateur apte à transformer automatiquement un code source d'une fonction sécurisée en un code binaire de cette fonction sécurisée, **caractérisé en ce que** le compilateur est apte à transformer automatiquement le code source en un code binaire conforme à la revendication 12, ce compilateur étant configuré à cet effet pour générer pour au moins un code contenu dans le code source :
- une ligne de code comportant le cryptogramme de ce code et une première étiquette d'intégrité permettant de vérifier l'intégrité de la ligne de code ;
- un premier pointeur contenant l'adresse à laquelle est enregistrée la ligne de code,
- une instruction de lecture de la ligne de code à l'aide du premier pointeur qui, lorsqu'elle est exécutée par le microprocesseur, déclenche l'exécution des opérations suivantes par le microprocesseur :
c1) le chargement du premier pointeur dans un registre du microprocesseur,
c2) le chargement de la ligne de code enregistrée à l'adresse contenue dans le premier pointeur, puis
c3) la vérification de l'intégrité de la ligne de code chargée, cette vérification comportant la construction d'une seconde étiquette d'intégrité à partir du cryptogramme contenu dans la ligne de code chargée, puis la comparaison de cette seconde étiquette d'intégrité à la première étiquette d'intégrité contenue dans la ligne de code chargée, puis
c4) lorsque la seconde étiquette d'intégrité ne correspond pas à la première étiquette d'intégrité, c'est-à-dire que la vérification de l'intégrité de la ligne de code chargée échoue, le microprocesseur déclenche systématiquement le signalement d'une faute d'exécution, et
c5) lorsque la seconde étiquette d'intégrité correspond à la première étiquette d'intégrité, c'est-à-dire que la ligne de code chargée est intègre, le cryptogramme du code est déchiffré pour obtenir un code en clair et le
déclenchement d'une faute d'exécution est inhibé ;
**caractérisé en ce que** :
- le premier pointeur comprend :
- une première plage de bits contenant l'adresse de la ligne de code, et
- une seconde plage différente de bits contenant un identifiant du premier pointeur, l'identifiant de ce premier pointeur permettant d'identifier de façon unique ce premier pointeur parmi un ensemble contenant plusieurs pointeurs différents mis en œuvre lors de la même exécution du code binaire par ce microprocesseur, et
- la première étiquette d'intégrité est construite ou chiffrée à l'aide de l'identifiant du premier pointeur.

## Patentansprüche

1. Verfahren zur Ausführung eines Binärcodes einer mikroprozessorgesicherten Funktion, wobei dieses Verfahren die folgenden Schritte umfasst:
a) Speichern (150, 194) einer Codezeile in einem Speicher, wobei diese Codezeile ein Kryptogramm des Codes und eine erste Integritätsmarkierung umfasst, die eine Überprüfung der Integrität der Codezeile ermöglicht,
b) Erhalten (150, 290) eines ersten Zeigers, der die Adresse enthält, an der diese Codezeile gespeichert ist, durch den Mikroprozessor, anschließend
c) Ausführen einer Anweisung zum Lesen dieser Codezeile mithilfe des ersten Zeigers durch den Mikroprozessor und dazu Ausführen der folgenden Operationen durch den Mikroprozessor:
c1) Laden (164, 264) des ersten Zeigers in ein Register des Mikroprozessors,
c2) Laden (166, 266) der Codezeile, die an der im ersten Zeiger enthaltenen Adresse gespeichert ist, anschließend
c3) Überprüfen (176, 184, 276, 284) der Integrität der geladenen Codezeile, wobei dieses Überprüfen Konstruieren einer zweiten Integritätsmarkierung anhand des Kryptogramms, das in der geladenen Codezeile enthalten ist, anschließend Vergleichen dieser zweiten Integritätsmarkierung mit der ersten Integritätsmarkierung, die in der geladenen Codezeile enthalten ist, umfasst, anschließend
c4) wenn die zweite Integritätsmarkierung nicht der ersten Integritätsmarkierung entspricht, d. h. das Überprüfen der Integrität der geladenen Codezeile fehlschlägt, löst der Mikroprozessor systematisch die Signalisierung eines Ausführungsfehlers aus (172), und
c5) wenn die zweite Integritätsmarkierung der ersten Integritätsmarkierung entspricht, d. h. die geladene Codezeile integer ist, wird das Kryptogramm des Codes entschlüsselt (178, 278), um einen unverschlüsselten Code zu erhalten, und die Auslösung eines Ausführungsfehlers wird gehemmt;
**dadurch gekennzeichnet, dass**:
- Erhalten (150, 290) des ersten Zeigers Erhalt eines ersten Zeigers umfasst, umfassend:
- einen ersten Bitbereich, der die Adresse der Codezeile enthält, und
- einen zweiten anderen Bitbereich, der eine Kennung des ersten Zeigers enthält, wobei die Kennung dieses ersten Zeigers ermöglicht, diesen ersten Zeiger aus einer Gruppe, die mehrere verschiedene, bei derselben Ausführung des Binärcodes durch diesen Mikroprozessor umgesetzte Zeiger enthält, eindeutig zu benennen,
- Speichern (150, 194) der Codezeile Speichern einer Codezeile umfasst, in der die erste Integritätsmarkierung mithilfe der Kennung des ersten Zeigers konstruiert oder verschlüsselt wird,
- beim Laden (166, 266) der Codezeile wird die Adresse, die im ersten Bitbereich des ersten geladenen Zeigers enthalten ist, verwendet und die Kennung des ersten Zeigers, der im zweiten Bitbereich enthalten ist, wird nicht verwendet,
- beim Überprüfen (176, 184, 276, 284) der Integrität der geladenen Codezeile wird zudem die zweite Integritätsmarkierung konstruiert, indem die Kennung des ersten Zeigers, der im zweiten Bitbereich des ersten geladenen Zeigers enthalten ist, verwendet wird, so dass bei Verwendung eines zweiten Zeigers, der vom ersten Zeiger verschieden ist, anstelle des ersten Zeigers, um diese Codezeile zu lesen oder zu schreiben, das Überprüfen der Integrität des Codes fehlschlägt.

2. Verfahren nach Anspruch 1, wobei:
- Speichern (150, 194) der Codezeile Speichern einer Codezeile umfasst, in der das Kryptogramm mithilfe der Kennung des ersten Zeigers konstruiert wird, der im zweiten Bitbereich enthalten ist, und
- beim Entschlüsseln (178, 278) des Kryptogramms des Codes das Kryptogramm entschlüsselt wird, indem die Kennung des Zeigers verwendet wird, die im zweiten Bitbereich des geladenen ersten Zeigers enthalten ist.

3. Verfahren nach einem der vorhergehenden Ansprüche, wobei:
- Speichern (150, 194) der Codezeile Speichern einer Codezeile umfasst, in der die erste Integritätsmarkierung auch mithilfe der Adresse konstruiert oder entschlüsselt wird, die im ersten Bitbereich des ersten Zeigers enthalten ist, und
- beim Überprüfen (176, 184, 276, 284) der Integrität der geladenen Codezeile zudem die zweite Integritätsmarkierung konstruiert wird, indem die Adresse verwendet wird, die im ersten Bitbereich des ersten geladenen Zeigers enthalten ist.

4. Verfahren nach einem der vorhergehenden Ansprüche, wobei:
- Speichern (150, 194) der Codezeile Speichern einer Codezeile umfasst, in der das Kryptogramm auch mithilfe eines unabhängigen geheimen Schlüssels der Kennung des ersten Zeigers und der im ersten Zeiger enthaltenen Adresse konstruiert wird, und
- beim Entschlüsseln (178, 278) des Kryptogramms das Kryptogramm auch entschlüsselt wird, indem dieser geheime Schlüssel, der in einem gesicherten Speicher des Mikroprozessors gespeichert ist, vor Beginn der Ausführung des Binärcodes durch diesen Mikroprozessor verwendet wird.

5. Verfahren nach einem der vorhergehenden Ansprüche, wobei Erhalten (150, 290) des ersten Zeigers Erhalten eines ersten Zeigers umfasst, dessen Größe als Anzahl der Bits gleich der Größe einer Adresse ist, d. h. der maximalen Anzahl der Bits, die eine Adresse enthalten kann, die vom Mikroprozessor über einen Adressbus in den Speicher übertragen werden kann.

6. Verfahren nach einem der vorhergehenden Ansprüche, wobei Speichern (194) der Codezeile Speichern einer Codezeile umfasst, in der der Code eine Dateneinheit ist und Schritt a) als Reaktion auf die Ausführung einer Anweisung durch den Mikroprozessor, diese Dateneinheit an der im ersten Zeiger enthaltenen Adresse in den Speicher zu schreiben, umfasst:
- Konstruieren (192) der Codezeile, die das Kryptogramm der Dateneinheit und die erste Integritätsmarkierung enthält, die mithilfe der Kennung des ersten Zeigers konstruiert oder verschlüsselt wurde, die in seinem zweiten Bitbereich enthalten ist, anschließend
- Speichern (194) der Codezeile, die so an der Adresse konstruiert wird, die im ersten Bitbereich des ersten Zeigers enthalten ist.

7. Verfahren nach Anspruch 6, wobei Schritt b) dem Schritt a) vorangeht und Schritt b) umfasst:
b1) Ausführen (290) einer Anweisung zur dynamischen Zuweisung eines Speicherbereichs im Speicher durch den Mikroprozessor, wobei diese Zuweisungsanweisung im Binärcode der gesicherten Funktion enthalten ist, anschließend
b2) als Reaktion:
- Reservieren eines freien Bereichs einer vorgegebenen Größe im Speicher, in dem der Mikroprozessor Codezeilen schreiben und lesen kann, und
- Erzeugen des ersten Zeigers, der in seinem ersten Bitbereich eine Adresse des reservierten Speicherbereichs und in seinem zweiten Bitbereich die Kennung des ersten Zeigers enthält.

8. Verfahren nach Anspruch 7, wobei als Reaktion auf die Ausführung (290) einer Anweisung zur Freigabe des zugewiesenen Speicherbereichs, auf den der erste Zeiger zeigt, durch den Mikroprozessor die Kennung des ersten Zeigers geändert wird und/oder der Inhalt dieses Speicherbereichs mit anderen Werten neu geschrieben wird.

9. Verfahren nach einem der vorhergehenden Ansprüche, wobei die Operation c1) (164) umfasst:
- Ausführen einer Anweisung zum Laden einer Datenzeile, die ein Kryptogramm des ersten Zeigers enthält, in den Speicher durch den Mikroprozessor, anschließend
- Entschlüsseln des Kryptogramms des ersten Zeigers, um den ersten Zeiger unverschlüsselt zu erhalten.

10. Verfahren nach Anspruch 9, wobei die Datenzeile, die das Kryptogramm des ersten Zeigers enthält, auf dieselbe Weise konstruiert wird wie die Codezeile, die an der im ersten Zeiger enthaltenen Adresse gespeichert ist, aber indem die Kennung des ersten Zeigers durch einen Wert null ersetzt wird.

11. Verfahren nach einem der vorhergehenden Ansprüche, wobei Speichern (150, 152) der Codezeile Speichern einer Codezeile umfasst, in der der Code die erste ausführbare Anweisung einer vom Mikroprozessor aufgerufenen Routine ist und das Verfahren umfasst:
- Ausführen (290) einer Anweisung zum Aufruf dieser Routine durch den Mikroprozessor, anschließend
- als Reaktion umfasst Schritt b) das Laden (264) des ersten Zeigers aus einer vorab gespeicherten Tabelle, die eine Kennung dieser Routine mit dem ersten Zeiger verknüpft, anschließend
- für jede Anweisungszeile der Routine Ausführen der Operation c3) (276), indem jedes Mal die Kennung des ersten geladenen Zeigers verwendet wird, um die zweite Integritätsmarkierung zu konstruieren.

12. Binärcode einer gesicherten Funktion, der dazu geeignet ist, durch einen Mikroprozessor ausgeführt zu werden, indem ein Ausführungsverfahren umgesetzt wird, wobei der Binärcode umfasst:
- eine Codezeile, die das Kryptogramm des Codes und eine erste Integritätsmarkierung umfasst, die eine Überprüfung der Integrität der Codezeile ermöglicht;
- einen ersten Zeiger, der die Adresse enthält, an der die Codezeile gespeichert ist,
- eine Anweisung zum Lesen dieser Codezeile mithilfe des ersten Zeigers, die bei Ausführung durch den Mikroprozessor das Ausführen der folgenden Operationen durch den Mikroprozessor auslöst:
c1) Laden des ersten Zeigers in ein Register des Mikroprozessors,
c2) Laden der Codezeile, die an der im ersten Zeiger enthaltenen Adresse gespeichert ist, anschließend
c3) Überprüfen der Integrität der geladenen Codezeile, wobei dieses Überprüfen Konstruieren einer zweiten Integritätsmarkierung anhand des Kryptogramms, das in der geladenen Codezeile enthalten ist, anschließend Vergleichen dieser zweiten Integritätsmarkierung mit der ersten Integritätsmarkierung, die in der geladenen Codezeile enthalten ist, umfasst, anschließend
c4) wenn die zweite Integritätsmarkierung nicht der ersten Integritätsmarkierung entspricht, d. h. Überprüfen der Integrität der geladenen Codezeile fehlschlägt, löst der Mikroprozessor systematisch die Signalisierung eines Ausführungsfehlers aus, und
c5) wenn die zweite Integritätsmarkierung der ersten Integritätsmarkierung entspricht, d. h. die geladene Codezeile integer ist, wird das Kryptogramm des Codes entschlüsselt, um einen unverschlüsselten Code zu erhalten, und die Auslösung eines Ausführungsfehlers wird gehemmt;
**dadurch gekennzeichnet, dass**:
- der erste Zeiger umfasst:
- einen ersten Bitbereich, der die Adresse der Codezeile enthält, und
- einen zweiten anderen Bitbereich, der eine Kennung des ersten Zeigers enthält, wobei die Kennung dieses ersten Zeigers ermöglicht, diesen ersten Zeiger aus einer Gruppe, die mehrere verschiedene, bei derselben Ausführung des Binärcodes durch diesen Mikroprozessor umgesetzte Zeiger enthält, eindeutig zu benennen, und
- die erste Integritätsmarkierung mithilfe der Kennung des ersten Zeigers konstruiert oder verschlüsselt wird.

13. Speichermedium für Informationen, die durch einen Mikroprozessor lesbar sind, **dadurch gekennzeichnet, dass** dieses Speichermedium für Informationen einen Binärcode nach Anspruch 12 umfasst.

14. Mikroprozessor (2) für die Umsetzung eines Verfahrens nach einem der Ansprüche 1 bis 11, wobei dieser Mikroprozessor dazu konfiguriert ist, die folgenden Schritte auszuführen:
a) Speichern einer Codezeile in einem Speicher, wobei diese Codezeile ein Kryptogramm des Codes und eine erste Integritätsmarkierung umfasst, die eine Überprüfung der Integrität der Codezeile ermöglicht,
b) Erhalten eines ersten Zeigers, der die Adresse enthält, an der diese Codezeile gespeichert ist, durch den Mikroprozessor, anschließend
c) Ausführen einer Anweisung zum Lesen dieser Codezeile mithilfe des ersten Zeigers durch den Mikroprozessor und dazu Ausführen der folgenden Operationen durch den Mikroprozessor:
c1) Laden des ersten Zeigers in ein Register des Mikroprozessors,
c2) Laden der Codezeile, die an der im ersten Zeiger enthaltenen Adresse gespeichert ist, anschließend
c3) Überprüfen der Integrität der geladenen Codezeile, wobei dieses Überprüfen Konstruieren einer zweiten Integritätsmarkierung anhand des Kryptogramms, das in der geladenen Codezeile enthalten ist, anschließend Vergleichen dieser zweiten Integritätsmarkierung mit der ersten Integritätsmarkierung, die in der geladenen Codezeile enthalten ist, umfasst, anschließend
c4) wenn die zweite Integritätsmarkierung nicht der ersten Integritätsmarkierung entspricht, d. h. die Überprüfung der Integrität der geladenen Codezeile fehlschlägt, löst der Mikroprozessor systematisch die Signalisierung eines Ausführungsfehlers aus, und
c5) wenn die zweite Integritätsmarkierung der ersten Integritätsmarkierung entspricht, d. h. die geladene Codezeile integer ist, wird das Kryptogramm des Codes entschlüsselt, um einen unverschlüsselten Code zu erhalten, und die Auslösung eines Ausführungsfehlers wird gehemmt;
**dadurch gekennzeichnet, dass** der Mikroprozessor auch dazu konfiguriert ist:
- beim Erhalten des ersten Zeigers einen ersten Zeiger zu erhalten, umfassend:
- einen ersten Bitbereich, der die Adresse der Codezeile enthält, und
- einen zweiten anderen Bitbereich, der eine Kennung des ersten Zeigers enthält, wobei die Kennung dieses ersten Zeigers ermöglicht, diesen ersten Zeiger aus einer Gruppe, die mehrere verschiedene, bei derselben Ausführung des Binärcodes durch diesen Mikroprozessor umgesetzte Zeiger enthält, eindeutig zu benennen,
- beim Speichen der Codezeile Speichern einer Codezeile, in der die erste Integritätsmarkierung mithilfe der Kennung des ersten Zeigers konstruiert oder verschlüsselt wird,
- beim Laden der Codezeile wird die Adresse, die im ersten Bitbereich des ersten geladenen Zeigers enthalten ist, verwendet und die Kennung des ersten Zeigers, der im zweiten Bitbereich enthalten ist, wird nicht verwendet,
- beim Überprüfen der Integrität der geladenen Codezeile wird zudem die zweite Integritätsmarkierung konstruiert, indem die Kennung des ersten Zeigers, der im zweiten Bitbereich des ersten geladenen Zeigers enthalten ist, verwendet wird, so dass bei Verwendung eines zweiten Zeigers, der vom ersten Zeiger verschieden ist, anstelle des ersten Zeigers, um diese Codezeile zu lesen oder zu schreiben, das Überprüfen der Integrität des Codes fehlschlägt.

15. Compiler, der dazu geeignet ist, einen Quellcode einer gesicherten Funktion automatisch in einen Binärcode dieser gesicherten Funktion umzuwandeln, **dadurch gekennzeichnet, dass** der Compiler dazu geeignet ist, den Quellcode automatisch in einen Binärcode nach Anspruch 12 umzuwandeln, wobei dieser Compiler dazu konfiguriert ist, für mindestens einen im Quellcode enthaltenen Code Folgendes zu erzeugen:
- eine Codezeile, die mindestens das Kryptogramm dieses Codes und eine erste Integritätsmarkierung umfasst, die eine Überprüfung der Integrität der Codezeile ermöglicht;
- einen ersten Zeiger, der die Adresse enthält, an der die Codezeile gespeichert ist,
- eine Anweisung zum Lesen dieser Codezeile mithilfe des ersten Zeigers, die bei Ausführung durch den Mikroprozessor das Ausführen der folgenden Operationen durch den Mikroprozessor auslöst:
c1) Laden des ersten Zeigers in ein Register des Mikroprozessors,
c2) Laden der Codezeile, die an der im ersten Zeiger enthaltenen Adresse gespeichert ist, anschließend
c3) Überprüfen der Integrität der geladenen Codezeile, wobei dieses Überprüfen Konstruieren einer zweiten Integritätsmarkierung anhand des Kryptogramms, das in der geladenen Codezeile enthalten ist, anschließend Vergleichen dieser zweiten Integritätsmarkierung mit der ersten Integritätsmarkierung, die in der geladenen Codezeile enthalten ist, umfasst, anschließend
c4) wenn die zweite Integritätsmarkierung nicht der ersten Integritätsmarkierung entspricht, d. h. das Überprüfen der Integrität der geladenen Codezeile fehlschlägt, löst der Mikroprozessor systematisch die Signalisierung eines Ausführungsfehlers aus, und
c5) wenn die zweite Integritätsmarkierung der ersten Integritätsmarkierung entspricht, d. h. die geladene Codezeile integer ist, wird das Kryptogramm des Codes entschlüsselt, um einen unverschlüsselten Code zu erhalten, und die Auslösung eines Ausführungsfehlers wird gehemmt;
**dadurch gekennzeichnet, dass**:
- der erste Zeiger umfasst:
- einen ersten Bitbereich, der die Adresse der Codezeile enthält, und
- einen zweiten anderen Bitbereich, der eine Kennung des ersten Zeigers enthält, wobei die Kennung dieses ersten Zeigers ermöglicht, diesen ersten Zeiger aus einer Gruppe, die mehrere verschiedene, bei derselben Ausführung des Binärcodes durch diesen Mikroprozessor umgesetzte Zeiger enthält, eindeutig zu benennen, und
- die erste Integritätsmarkierung mithilfe der Kennung des ersten Zeigers konstruiert oder verschlüsselt wird.

## Claims

1. Method for executing a binary code of a secure function with a microprocessor, this method comprising the following steps:
a) storing (150, 194), in a memory, a line of code, this line of code containing a cryptogram of the code and a first integrity tag allowing the integrity of the line of code to be verified,
b) obtaining (150, 290), with the microprocessor, a first pointer containing the address at which this line of code is stored, then
c) executing, with the microprocessor, an instruction to read this line of code using the first pointer and, to this end, executing the following operations with the microprocessor:
c1) loading (164, 264) the first pointer into a register of the microprocessor,
c2) loading (166, 266) the line of code stored at the address contained in the first pointer, then
c3) verifying (176, 184, 276, 284) the integrity of the loaded line of code, this verification comprising constructing a second integrity tag from the cryptogram contained in the loaded line of code, then comparing this second integrity tag to the first integrity tag contained in the loaded line of code, then c4) when the second integrity tag does not correspond to the first integrity tag, i.e. when the verification of the integrity of the loaded line of code fails, the microprocessor systematically triggers (172) flagging of an execution fault, and c5) when the second integrity tag corresponds to the first integrity tag, i.e. when the loaded line of code is of integrity, the cryptogram of the code is decrypted (178, 278) to obtain a cleartext code and triggering of an execution fault is inhibited;
**characterized in that**:
- the step of obtaining (150, 290) the first pointer comprises obtaining a first pointer containing:
- a first range of bits containing the address of the line of code, and
- a second, different range of bits containing an identifier of the first pointer, the identifier of this first pointer allowing this first pointer to be uniquely identified among a set that contains a plurality of different pointers employed during the same execution of the binary code by this microprocessor,
- the step of storing (150, 194) the line of code comprises storing a line of code in which the first integrity tag is constructed or encrypted using the identifier of the first pointer,
- during the operation of loading (166, 266) the line of code, it is the address contained in the first range of bits of the loaded first pointer that is used and the identifier of the first pointer contained in the second range of bits is not used,
- during the operation of verifying (176, 184, 276, 284) the integrity of the loaded line of code, the second integrity tag is constructed, in addition, using the identifier of the first pointer contained in the second range of bits of the loaded first pointer, so that if a second pointer, different from the first pointer, is used instead of the first pointer to read or write this line of code, the verification of the integrity of the line of code fails.

2. Method according to Claim 1, wherein:
- the step of storing (150, 194) the line of code comprises storing a line of code in which the cryptogram is constructed using the identifier of the first pointer contained in the second range of bits, and
- during the operation of decrypting (178, 278) the cryptogram of the code, the cryptogram is decrypted using the pointer identifier contained in the second range of bits of the loaded first pointer.

3. Method according to either one of the preceding claims, wherein:
- the step of storing (150, 194) the line of code comprises storing a line of code in which the first integrity tag is also constructed or encrypted using the address contained in the first range of bits of the first pointer, and
- during the operation of verifying (176, 184, 276, 284) the integrity of the loaded line of code, the second integrity tag is constructed, in addition, using the address contained in the first range of bits of the loaded first pointer.

4. Method according to any one of the preceding claims, wherein:
- the step of storing (150, 194) the line of code comprises storing a line of code in which the cryptogram is also constructed using a secret key independent of the identifier of the first pointer and of the address contained in this first pointer, and
- during the operation of decrypting (178, 278) the cryptogram, the cryptogram is also decrypted using this secret key, which is stored in a secure memory of the microprocessor before the start of the execution of the binary code by this microprocessor.

5. Method according to any one of the preceding claims, wherein the step of obtaining (150, 290) the first pointer comprises obtaining a first pointer the size of which, in number of bits, is equal to the size of an address, i.e. to the maximum number of bits that an address transferred from the microprocessor to the memory via an address bus can contain.

6. Method according to any one of the preceding claims, wherein the step of storing (194) the line of code comprises storing a line of code in which the code is a datum and step a) comprises, in response to the execution, by the microprocessor, of an instruction to write this datum to the memory at the address contained in the first pointer:
- constructing (192) the line of code containing the cryptogram of the datum and the first integrity label constructed or encrypted using the identifier of the first pointer contained in its second range of bits, then
- storing (194) the line of code thus constructed at the address contained in the first range of bits of the first pointer.

7. Method according to Claim 6, wherein step b) precedes step a) and step b) comprises:
b1) executing (290), with the microprocessor, an instruction to dynamically allocate a memory region in the memory, this allocation instruction being contained in the binary code of the secure function, then
b2) in response:
- reserving, in the memory, a free region of a preset size, to and from which the microprocessor may write and read lines of code, and
- generating the first pointer, which contains, in its first range of bits, an address of the reserved memory region and, in its second range of bits, the identifier of the first pointer.

8. Method according to Claim 7, wherein, in response to the execution (290), by the microprocessor, of an instruction to free the allocated memory region to which the first pointer points, the identifier of the first pointer is modified and/or the content of this memory region is rewritten with different values.

9. Method according to any one of the preceding claims, wherein operation c1) (164) comprises:
- executing, with the microprocessor, an instruction to load, from the memory, a data line containing a cryptogram of the first pointer, then
- decrypting the cryptogram of the first pointer to obtain the first pointer in cleartext.

10. Method according to Claim 9, wherein the data line containing the cryptogram of the first pointer is constructed in the same way as the line of code stored at the address contained in this first pointer but with the identifier of the first pointer replaced with a zero value.

11. Method according to any one of the preceding claims, wherein the step of storing (150, 152) the line of code comprises storing a line of code in which the code is the first executable instruction of a routine called by the microprocessor and the method comprises:
- executing (290), with the microprocessor, an instruction to call this routine, then
- in response, step b) comprises loading (264) the first pointer from a pre-stored table associating an identifier of this routine with the first pointer, then
- for each instruction line of the routine, executing operation c3) (276) using, each time, the identifier of the loaded first pointer to construct the second integrity tag.

12. Binary code of a secure function able to be executed by a microprocessor, implementing an executing method according to any one of the preceding claims, wherein the binary code comprises:
- a line of code containing the cryptogram of the code and a first integrity tag allowing the integrity of the line of code to be verified,
- a first pointer containing the address at which the line of code is stored,
- an instruction to read the line of code using the first pointer which, when said instruction is executed by the microprocessor, triggers the execution of the following operations by the microprocessor:
c1) loading the first pointer into a register of the microprocessor,
c2) loading the line of code stored at the address contained in the first pointer,
then
c3) verifying the integrity of the loaded line of code, this verification comprising constructing a second integrity tag from the cryptogram contained in the loaded line of code, then comparing this second integrity tag to the first integrity tag contained in the loaded line of code, then
c4) when the second integrity tag does not correspond to the first integrity tag, i.e. when the verification of the integrity of the loaded line of code fails, the microprocessor systematically triggers flagging of an execution fault, and
c5) when the second integrity tag corresponds to the first integrity tag, i.e. when the loaded line of code is of integrity, the cryptogram of the code is decrypted to obtain a cleartext code and triggering of an execution fault is inhibited;
**characterized in that**:
- the first pointer contains:
- a first range of bits containing the address of the line of code, and
- a second, different range of bits containing an identifier of the first pointer, the identifier of this first pointer allowing this first pointer to be uniquely identified among a set that contains a plurality of different pointers employed during the same execution of the binary code by this microprocessor, and
- the first integrity tag is constructed or encrypted using the identifier of the first pointer.

13. Data storage medium that is readable by a microprocessor, **characterized in that** this data storage medium contains a binary code according to Claim 12.

14. Microprocessor (2) for implementing a method according to any one of Claims 1 to 11, this microprocessor being configured to execute the following steps:
a) storing, in a memory, a line of code, this line of code containing a cryptogram of the code and a first integrity tag allowing the integrity of the line of code to be verified,
b) obtaining, with the microprocessor, a first pointer containing the address at which this line of code is stored, then
c) executing, with the microprocessor, an instruction to read this line of code using the first pointer and, to this end, executing the following operations with the microprocessor:
c1) loading the first pointer into a register of the microprocessor,
c2) loading the line of code stored at the address contained in the first pointer,
then
c3) verifying the integrity of the loaded line of code, this verification comprising constructing a second integrity tag from the cryptogram contained in the loaded line of code, then comparing this second integrity tag to the first integrity tag contained in the loaded line of code, then
c4) when the second integrity tag does not correspond to the first integrity tag, i.e. when the verification of the integrity of the loaded line of code fails, the microprocessor systematically triggers flagging of an execution fault, and
c5) when the second integrity tag corresponds to the first integrity tag, i.e. when the loaded line of code is of integrity, the cryptogram of the code is decrypted to obtain a cleartext code and triggering of an execution fault is inhibited;
**characterized in that** the microprocessor is also configured:
- during the step of obtaining the first pointer, to obtain a first pointer containing:
- a first range of bits containing the address of the line of code, and
- a second, different range of bits containing an identifier of the first pointer, the identifier of this first pointer allowing this first pointer to be uniquely identified among a set that contains a plurality of different pointers employed during the same execution of the binary code by this microprocessor,
- during the step of storing the line of code, to store a line of code in which the first integrity tag is constructed or encrypted using the identifier of the first pointer,
- during the operation of loading the line of code, it is the address contained in the first range of bits of the loaded first pointer that is used and the identifier of the first pointer contained in the second range of bits is not used,
- during the operation of verifying the integrity of the loaded line of code, the second integrity tag is constructed, in addition, using the identifier of the first pointer contained in the second range of bits of the loaded first pointer, so that if a second pointer, different from the first pointer, is used instead of the first pointer to read or write this line of code, the verification of the integrity of the line of code fails.

15. Compiler able to automatically convert a source code of a secure function into a binary code of this secure function, **characterized in that** the compiler is able to automatically convert the source code into a binary code according to Claim 12, this compiler being configured to this end to generate, for at least one code contained in the source code:
- a line of code containing the cryptogram of this code and a first integrity tag allowing the integrity of the line of code to be verified,
- a first pointer containing the address at which the line of code is stored,
- an instruction to read the line of code using the first pointer that, when it is executed by the microprocessor, triggers the execution of the following operations by the microprocessor:
c1) loading the first pointer into a register of the microprocessor,
c2) loading the line of code stored at the address contained in the first pointer,
then
c3) verifying the integrity of the loaded line of code, this verification comprising constructing a second integrity tag from the cryptogram contained in the loaded line of code, then comparing this second integrity tag to the first integrity tag contained in the loaded line of code, then
c4) when the second integrity tag does not correspond to the first integrity tag, i.e. when the verification of the integrity of the loaded line of code fails, the microprocessor systematically triggers flagging of an execution fault, and
c5) when the second integrity tag corresponds to the first integrity tag, i.e. when the loaded line of code is of integrity, the cryptogram of the code is decrypted to obtain a cleartext code and triggering of an execution fault is inhibited;
**characterized in that**:
- the first pointer contains:
- a first range of bits containing the address of the line of code, and
- a second, different range of bits containing an identifier of the first pointer, the identifier of this first pointer allowing this first pointer to be uniquely identified among a set that contains a plurality of different pointers employed during the same execution of the binary code by this microprocessor, and
- the first integrity tag is constructed or encrypted using the identifier of the first pointer.
